# EUROPEAN PATENT APPLICATION

(11) **EP 1 508 878 A1**
(43) Date of publication of application: **23.02.2005**
(21) Application number: 02788589.6
(22) Date of filing: 25.10.2002
(51) Int. Cl.: G07B 15/00, G06F 17/60, B60S 5/00, B60S 1/08

(54) **TOLL ROAD CHARGE COLLECTION SYSTEM USING ARTIFICIAL SATELLITE, CHARGE COLLECTING MACHINE, AND CHARGE COLLECTING METHOD**

(60) Divisional application: 04023983.2
(71) Applicant: Takida, Yoshiaki, Nagoya-shi, Aichi 463-0051 (JP)
(72) Inventor: Takida, Yoshiaki, Nagoya-shi, Aichi 463-0051 (JP)
(74) Representative: Vetter, Hans, Dipl.-Phys.Dr.
(86) International application number: PCT/JP2002/011103
(87) International publication number: WO 2004/038663

(57) **Abstract**

A toll road charge collection system comprises a vehicle (7) having an on-vehicle machine (11, 130) mounted thereon, an artificial satellite (1), and a system data center (20). The on-vehicle machine (11, 130) receives radio signal from the artificial satellite (1), and calculates the latitude, the longitude, and the altitude as the vehicle position according to the received radio signal. Latitude data, longitude data, and altitude data indicating the traveling vehicle position history are stored in an external storage unit (46) as a time-series log file, and transmitted to the system data center (20), where the data are stored/accumulated in a storage unit (63) for each vehicle. In the system data center (20), a toll road section in which the vehicle (7) has traveled is determined according to the toll road path position data including the latitude data, the longitude data, and the altitude data indicating the traveling vehicle position history transmitted from the vehicle (7) and stored/accumulated in a database. The traveling charge is calculated for each person traveling on the toll road according to the traveling charge data specified for each route section, and the charge is collected by the automatic payment through an account of a financial institution (25) set by the toll road traveling person in advance.

## Description

### TECHNICAL FIELD OF THE INVENTION

This invention relates to a toll road charge collection system using an artificial satellite, a charge collecting machine and a charge collecting method, more particularly to a toll road charge collection system using an artificial satellite, a charge collecting machine and a charge collecting method, that allow road charge collection without using conventional facilities like a tollbooth or ETC system on a toll road.

### BACKGROUND OF THE INVENTION

Conventionally, a toll road charge has been collected by prepayment at a tollbooth placed at a toll road entrance, or by on-the-spot settlement in cash or by credit card, prepaid card, etc., following handover of a ticket, acquired from a ticket splitter installed at the entrance, to an agent at a tollbooth placed at a toll road exit for charge calculation.

However, such a charge collecting method necessitates human operation and cause frequent traffic jams in the vicinity of the tollbooths. Accordingly, the ETC (Electronic Charge collection system) has been introduced these days in order to simplify the aforementioned method. In this ETC system, information necessary for charge collection is transmitted and received by way of wireless communication between a road-side antenna located at the toll road entrance/exit and an on-vehicle machine mounted on a vehicle. Actual payment of the toll is made by automatic payment through a financial institution, and thus it is hardly necessary to stop the vehicle at the toll road entrance/exit.

The above-described conventional charge collecting method or ETC system necessitates human operation and facilities such as tollbooths and tollgates. The initial costs and the maintenance costs are covered by the tolls, etc. which are paid by the toll road traveling persons. Accordingly, it is preferable that the charge collection system is as simple as possible.

### DISCLOSURE OF THE INVENTION

One object of the present invention is to provide a charge collection system which can substantially simplify facilities and human operation for toll road charge collection and which further achieves smooth traffic, as well as to provide a road charge collecting method which can substantially simplify the facilities, etc. necessary for toll road charge collection. Another object of the present invention is to provide an on-vehicle charge collecting machine adapted to such charge collection system and charge collecting method.

In the present invention, a traveling position history of a vehicle is constantly recorded/accumulated based on latitude data, longitude data, and altitude data defining a vehicle position obtained using an artificial satellite together with time data. Based on the record, it is determined whether the vehicle has traveled in a toll road. When the vehicle has traveled in a toll road, a traveling charge for the toll road section in which the vehicle has traveled is automatically collected according to the stored/accumulated history data by automatic payment through a financial institution. Particularly, the toll road charge collection system of the present invention comprises a driver license card that is capable of storing a driver identification code as well as data relating to the driver license, a reading device for reading the storage data from the driver license card, an information output device for outputting latitude data, longitude data, and altitude data defining a vehicle position obtained from an artificial satellite together with time data obtained from a clock, a traveling vehicle position history data storage device for storing traveling vehicle position data indicating a travel position history of the vehicle based on the latitude data, the longitude data, the altitude data, and time data outputted from the information output device, a road data storage device for storing in advance locations and altitudes as well as data regarding road tolls, a calculation device for specifying which toll road section in which the vehicle has traveled and calculating a traveling charge, and a charge collection processing device for collecting the toll road traveling charge calculated by the calculation device by automatic payment through an account of a financial institution set by the traveling person when an on-vehicle machine was mounted on the vehicle, based on the driver identification code read from the driver license by the reading device.

The above toll road charge collection system comprises a plurality of vehicles, some artificial satellites, a system data center, etc.

Each vehicle is provided with a reading device for reading data stored in the driver license, an information output device for outputting latitude data, longitude data, and altitude data of the vehicle together with time data, and a communication device for communicating with the system data center. The vehicle further comprises an engine start determination device for permitting the engine to be started as an authentic driver license card is inserted.

The driver license card is a card which can store the driver identification code as well as data relating to the driver license. At the present, an IC card is ideal for the use. It is preferable that the IC card also stores data relating to driving characteristics of the driver, and the vehicle is provided with a vehicle state setting device for setting the vehicle to the most appropriate state for the driver according to the data relating to the driving characteristics of the driver which is read from the driver license IC card by the reading device into a control unit, that is, MPU, in the vehicle.

Charge collecting machines to be mounted on the vehicle are classified into a combination type with a vehicle navigation feature and a single type without a vehicle navigation feature. In the former type of charge collecting machine, the vehicle navigation feature can be used as a component for outputting the latitude data, the longitude data, and the altitude data, calculated based on a plurality of radio signal received from some artificial satellites.

The former charge collecting machine has a vehicle position information output device for outputting latitude data, longitude data, and altitude data, calculated based on radio signal received from artificial satellites, with the vehicle navigation feature which determines a vehicle traveling path based on the vehicle position information from the vehicle position information output device, etc. The former charge collecting machine further comprises a reading device for reading data from the driver license card storing the driver identification code as well as the data relating to the driver license, and a transmission device for transmitting the driver identification code read from the reading device and vehicle position data, that is, the latitude data, the longitude data, and the altitude data, outputted from the position information output device along with respective time data and vehicle operating state parameters, that is, operating state data of respective operating portions of the vehicle, to the system data center.

On the other hand, the latter charge collecting machine of a single type comprises a reading device for reading the driver identification code as well as storage data from the driver license card capable of storing in advance the driver identification code as well as data relating to the driver license, an information output device for outputting vehicle position data calculated based on radio signal received from the artificial satellites, that is, the latitude data, the longitude data, and the altitude data, together with time data obtained from a clock, and a communication device for transmitting the driver identification code read by the reading device as well as the data from the information output device, to the system data center which performs a road charge calculation and collection process.

The system data center, which intensively collects a plurality of vehicle data transmitted from a plurality of vehicles, comprises a traveling vehicle position history data storage device for storing traveling vehicle position data indicating the vehicle traveling position history per vehicle, a road data storage device for storing locations, altitudes and names of all the roads across the country and charge data regarding toll roads, a calculation device for determining in which toll road section the vehicle has traveled and calculating the traveling charge, a communication device for communicating with the vehicle or a financial institution, and a road charge collection processing device for collecting the charge, etc. In the traveling vehicle position data storage device, a vehicle data table is created per driver identification code and includes the latitude data, the longitude data and the altitude data at vehicle passing points. These data are stored/accumulated along with the time data as time series data.

The vehicle is provided with a vehicle operating state parameter collection device for collecting data indicating the operating state of each operating portion of the vehicle. The system data center further comprises a vehicle operating state storage device for storing/accumulating the vehicle operating state collected by the vehicle operating state parameter collection device per vehicle identification code for identifying each vehicle, and a vehicle diagnosis notification device for determining whether the operating state of the vehicle is appropriate based on memory contents stored in the vehicle operating state storage device using a diagnosis program, and, when it is determined that any maintenance is necessary, making a notification to the owner of the vehicle specified by the vehicle identification code.

It is preferable that the above system data center further comprises a driver's driving technique diagnosis device which allows diagnosis of the driver's driving technique by analyzing the vehicle operating state data collected and stored/accumulated by the vehicle operating state parameter collection device together with nationwide all-road database data including topographical data as well as the time data.

It is further preferable that the system data center further comprises a road congestion state analyzing device which analyzes each road congestion state in real time based on data showing a position of each vehicle transmitted from a plurality of vehicles and data on the traveling direction and traveling speed. By transmitting the road congestion state data, that is the data resulting from the analysis, to the vehicle provided with the vehicle navigation feature, it is possible to find the most appropriate traveling path to a destination at the time in the vehicle.

It is preferable that the vehicle comprises an automatic wiper control device for controlling wiper operation, in order to have a favorable transmission and reception of radio signal between an antenna of the on-vehicle machine provided inside the vehicle and an antenna of the artificial satellite or system data center. The automatic wiper control device detects a windshield state by a windshield state detection device from an image obtained by imaging the windshield state by an imaging device and determines the optimal operation of the wiper.

It is preferable that the system data center comprises a rainfall distribution monitoring device for monitoring rainfall distribution based on information corresponding to the wiper operating state transmitted from a plurality of vehicles.

In the vehicle, it is possible to monitor a tread of a tire surface three-dimensionally by imaging a state of the tire running surface by the imaging device using two cameras provided in the vicinity of the tire. It is further preferable that the vehicle comprises a tire deterioration detection device which applies image pattern recognition to the imaged image data and determines whether the tire is deteriorated. Thus, the vehicle owner can be notified of the tire deterioration as well as exact tire rotation period or replacement period.

It is preferable that the vehicle further comprises an acceleration detection device for detecting acceleration of the vehicle, and a brake lamp flickering control device for flickering a brake lamp at a certain flickering time interval corresponding to deceleration of the vehicle at the time when a brake pedal is operated. The brake lamp flickering control device also shortens the flickering time interval as the deceleration is increased.

The toll road charge collecting method comprises steps of reading storage data from the driver license card storing the driver identification code and data relating to the driver license, etc., outputting latitude data, longitude data and altitude data defining the vehicle position calculated based on a plurality of radio signal received from some artificial satellites, together with time data obtained from a clock, storing vehicle traveling position history data together with time data based on the outputted latitude data, longitude data, altitude data and time data, the vehicle traveling position data being latitudes, longitudes and altitudes which correspond to all the vehicle positions the vehicle has passed, determining whether the vehicle has traveled in a toll road based on the stored latitude data, longitude data, altitude data and time data as well as data regarding locations and altitudes of all the roads, regardless of the road type: a toll road or an open road, digitalized in advance in the system data center, and calculating a charge based on a toll road charge database storing toll road traveling charges defined per vehicle type, according to a toll road section in which the vehicle has traveled which is stored as toll road traveling section number data, and collecting the charge for the toll road traveling section calculated per driver identification code by automatic payment through an account of a financial institution set by the traveling person in advance.

### BRIEF DESCRIPTION OF THE DRAWINGS

Fig. 1 shows a constitution of an entire toll road charge collection system as an embodiment of the present invention;

Fig. 2 shows an on-vehicle machine of a combination type with a vehicle navigation feature, mounted on a vehicle adapted to the toll road charge collection system as an embodiment;

Fig. 3 is a block diagram showing an electrical constitution of the on-vehicle machine which composes the toll road charge collection system as an embodiment;

Fig. 4 is a block diagram showing an electrical constitution of a system data center which composes the toll road charge collection system as an embodiment;

Fig. 5 shows a vehicle data table which is stored in a storage unit provided in the system data center;

Fig. 6 is an example of a vehicle operating state number setting list showing vehicle operating state number settings set to respective vehicle operating portions;

Fig. 7 is an example of a vehicle operating state number setting list showing particular numeric data of the vehicle operating state number set in the above-mentioned vehicle operating state number settings;

Fig. 8 is a particular example of vehicle operating state data to be stored in a vehicle operating state data storage area of the vehicle data table shown in Fig. 5;

Fig. 9 shows a nationwide all-road database created in advance and stored in the storage unit provided in the system data center;

Fig. 10 shows a toll road traveling section number data table to be stored in the storage unit provided in the system data center;

Fig. 11 is an open road traveling vehicle position data storage table to be stored in the storage unit provided in the system data center;

Fig. 12 shows a charge collection data table to be stored in the storage unit provided in the system data center;

Fig. 13 is a list showing an example of downward toll road section numbers, in which each section between respective interchanges on a toll road is associated with a unique number;

Fig. 14 is a list showing an example of upward toll road section numbers, in which each section between respective interchanges on a toll road is associated with a unique number;

Fig. 15 is a list showing an example of toll road interchange numbers, in which each interchange on a toll road is associated with a unique number;

Fig. 16 is a flowchart for explaining a process in the-on-vehicle machine;

Fig. 17 is a flowchart for explaining a process of specifying a traveling toll road section number or traveling open road route name in the system data center;

Fig. 18 is a flowchart for explaining a process of charge calculation and charge collection performed accompanied by determination of a traveling toll road section number shown in Fig. 17 in the system data center;

Figs. 19 show an on-vehicle machine of a single type without a vehicle navigation feature, in which (a) shows the on-vehicle machine mounted on a dashboard of the vehicle, and (b) shows the outer appearance of the on-vehicle machine;

Fig. 20 shows a camera in a tire deterioration detection device attached to the vehicle to detect a tire deterioration state;

Figs. 21 are drawings for explaining an automatic wiper control device for controlling wiper operation automatically, in which (a) shows a camera in a windshield state detection device, attached to the dashboard of the vehicle for detection of a windshield state, and (b) shows a sample of a dial-type operation switch used in the automatic wiper control device, provided at the base of a steering wheel;

Fig. 22 is a block diagram showing an electrical constitution of the automatic wiper control device which controls the wiper operation automatically according to the windshield state;

Fig. 23 is a flowchart for explaining the automatic wiper control device which controls the wiper operation automatically according to the windshield state;

Fig. 24 is a sample for explaining motion patterns of the wiper in the automatic wiper control device which controls the wiper operation automatically;

Fig. 25 shows positions of brake lamps on the vehicle;

Fig. 26 is a block diagram showing an electrical constitution of a brake lamp flickering control device which controls flickering of the brake lamp;

Fig. 27 is a flowchart for explaining a process in the brake lamp flickering control device; and

Fig. 28 is a sample for explaining flickering patterns of the brake lamp in the brake lamp flickering control device.

### BEST MODE FOR CARRYING OUT THE INVENTION

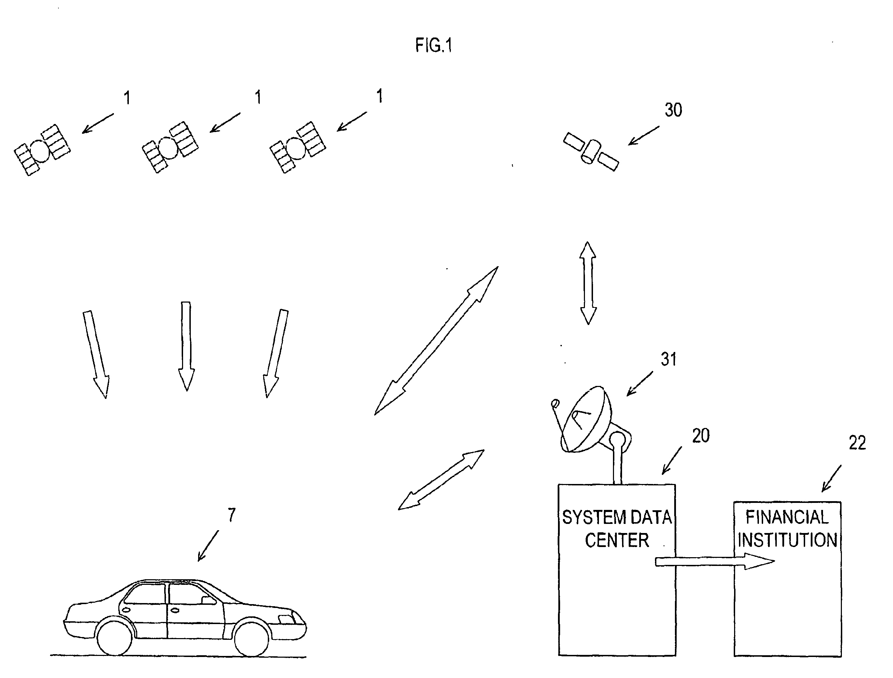

As shown in Fig. 1, a toll road charge collection system of the present embodiment comprises a vehicle having a later-described on-vehicle machine 11, 130 mounted thereon, GPS satellites 1, a communication satellite 30, a system data center 20, a financial institution 22, etc.

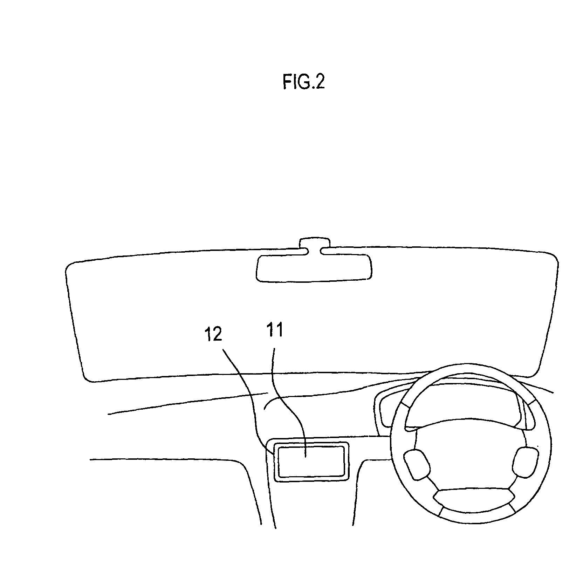

The vehicle 7, as shown in Fig. 2, has the on-vehicle machine 11 mounted on a center console panel 12 of the vehicle. The on-vehicle machine 11 shown in Fig. 2 is provided with a vehicle navigation feature which determines a vehicle traveling path to a destination using the GPS (Global Positioning System). However, the toll road charge collection system itself does not necessarily require such a vehicle navigation feature. Description on the on-vehicle machine 130 without a vehicle navigation feature will follow later. Description on the on-vehicle machine 11 with the vehicle navigation feature is firstly given.

Toll road charges are varied depending on vehicle types. At the present time, charges for a standard-size car, a medium-size car, a large-size car, an extra large-size car, a light car (automobile), and a bicycle, etc. are provided. The vehicle type has to be identified upon collection of the toll road charge. This can be done by the traveling person's report of the vehicle type at a vehicle dealer, etc. when the on-vehicle machine is mounted on the vehicle at the time of purchasing a new vehicle, or at a vehicle shop, etc. when the on-vehicle machine is mounted on the vehicle as bought separately from the vehicle, at the same time with when the traveling person registers the name, the address and an account of a financial institution for automatic toll road charge payment. The charge calculation is performed according to a traveling charge specified by the registered vehicle type.

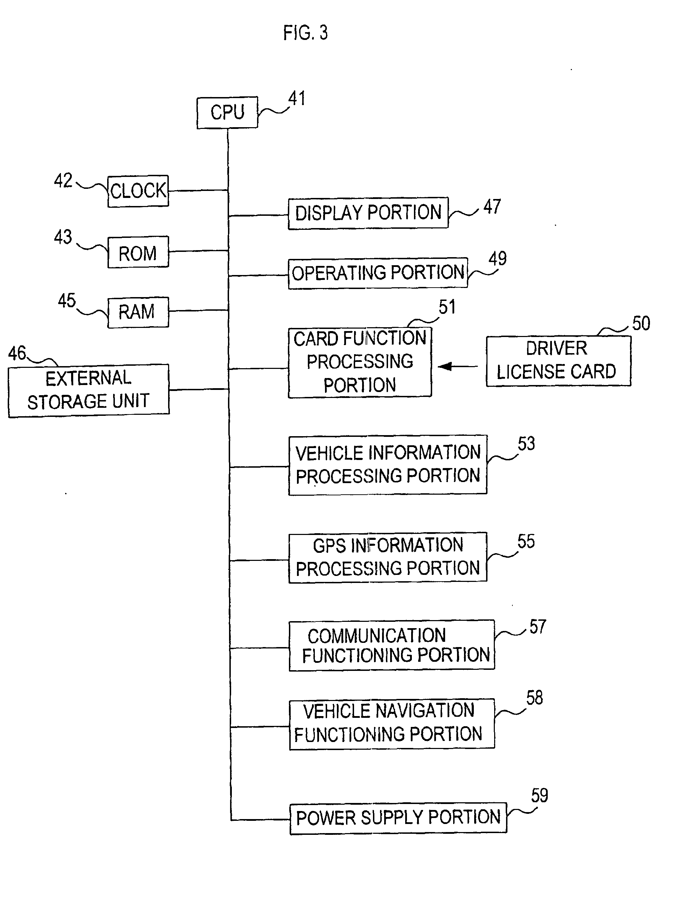

The on-vehicle machine 11 comprises essentially a CPU 41, a clock 42, a ROM 43, a RAM 45, an external storage unit 46, a display portion 47, an operating portion 49, a card function processing portion 51, a vehicle information processing portion 53, a GPS information processing portion 55, a communication functioning portion 57, a vehicle navigation functioning portion 58, and a power supply portion 59 as shown in Fig. 3. A driver license card 50 is to be inserted into the card function processing portion 51.

The CPU 41 controls various calculation processes and operation processes. The clock 42 is for supplying time data.

The ROM 43 stores a vehicle ID code at the time when the on-vehicle machine is manufactured, which then turns into a vehicle identification code when the on-vehicle machine is mounted on the vehicle. The ROM 43 also stores a control program for the CPU 41. The RAM 45 stores data and so on to be used for various processes performed by the CPU 41.

The external storage unit 46 stores/accumulates vehicle position data and vehicle operating state parameters showing operating states of each portion of the vehicle together with the time data obtained from the clock 42 as log information.

The display portion 47 displays charge collection functional information, and vehicle navigation system functional information or communication functional information, etc. It is provided with a liquid crystal display portion which can display graphic information and text information, and some LED lamps.

The operating portion 49 is for operation of the charge collecting function and reading of the driver license card data, operation of the vehicle navigation system function, or operation of the communication functioning portion 57, etc. The operating portion 49 is an operation switch provided on a body of the on-vehicle machine.

The card function processing portion 51 reads the driver identification code for identifying the driver as well as the data relating to the driver license from the driver license card 50 to the on-vehicle machine. The driver license card 50 is an IC card. Furthermore, the card function processing portion 51 updates storage data stored in the storage portion of the driver license card 50, such as data regarding driving characteristics of the driver and vehicle state setting data stored in an MPU, that is, a control unit of the vehicle.

The vehicle information processing portion 53 is for collecting the operating state of each operating portion of the vehicle 7. The information to be collected includes: numeric information such as traveling speed, acceleration, traveling distance, engine revolutions, instantaneous traveling fuel consumption, engine start/stop times, outdoor and indoor air temperature, and number of persons in the vehicle; states read from sensors, of fuel amount, brake fluid, power steering fluid, cooling water, transmission fluid, washer fluid, battery fluid, blowout of bulbs, blowout of fuses, etc.; opening/closing of doors, windows, hood, trunk, fuel feed opening, etc.; operating states of door lock ON/OFF, wiper ON/OFF as well as the operation pattern, respective lamps ON/OFF, foot pedal operation level, gear position, steering wheel rotational position, turn signal ON/OFF, seat belt ON/OFF, steering wheel inclination, seat position, etc.; or image data of tires and so on.

The GPS information processing portion 55 receives a plurality of radio signal from the GPS satellites 1. The GPS information processing portion 55 calculates and outputs latitude data, longitude data and altitude data defining the vehicle position based on the received radio signal data. Furthermore, the GPS information processing portion 55 corrects the time of the clock 42 according to the radio signal received from the GPS satellites 1.

The communication functioning portion 57 is for communicating with the outside of the vehicle. Particularly in the present invention, the communication functioning portion 57 transmits the vehicle traveling position history data to the system data center 20 together with the time data. In the event that the communication infrastructure is so improved that the fees for communication using IP phone, etc. can be charged at a fixed rate, continuous connection between the communication functioning portion 57 and the system data center 20 while the engine is running becomes economically possible. Then, constant transmission of the vehicle position data and operating state parameters of respective portions of the vehicle to the system data center 20 turns to reality. The communication with the on-vehicle machine 11 on the vehicle 7 is established via an antenna 31 of a ground base. The antenna herein includes those installed on the roofs of some buildings, etc. in urban districts. However, it is preferable that the communication is established via an up-in-the-air base station such as the communication satellite 30, taking into account a case that communication at a point far from the urban districts becomes necessary.

The vehicle navigation functioning portion 58 obtains output data from the GPS information processing portion 55 to make the display portion 47 display the current position of the vehicle, and determines a traveling path to the destination.

The power supply portion 59 is for supplying power to each components of the aforementioned on-vehicle machine 11. It uses a battery of the vehicle as a power source. Accordingly, when the authentic driver license is set in the on-vehicle machine and the engine key is switched from the OFF position to ON position, the on-vehicle machine is energized.

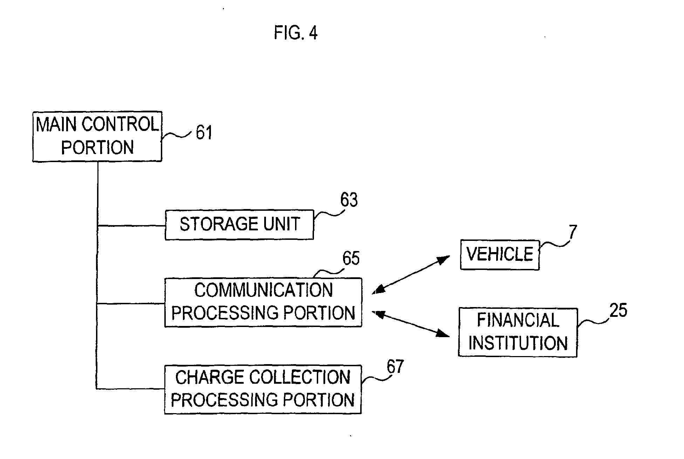

Now, a description with respect to the system data center 20 is given. The system data center 20 essentially comprises, as shown in Fig. 4, a main control portion 61, a storage unit 63, a communication processing portion 65 and a charge collection processing portion 67.

The main control portion 61 controls operation of the system data center 20. The main control portion 61 comprises a CPU, a ROM and a RAM.

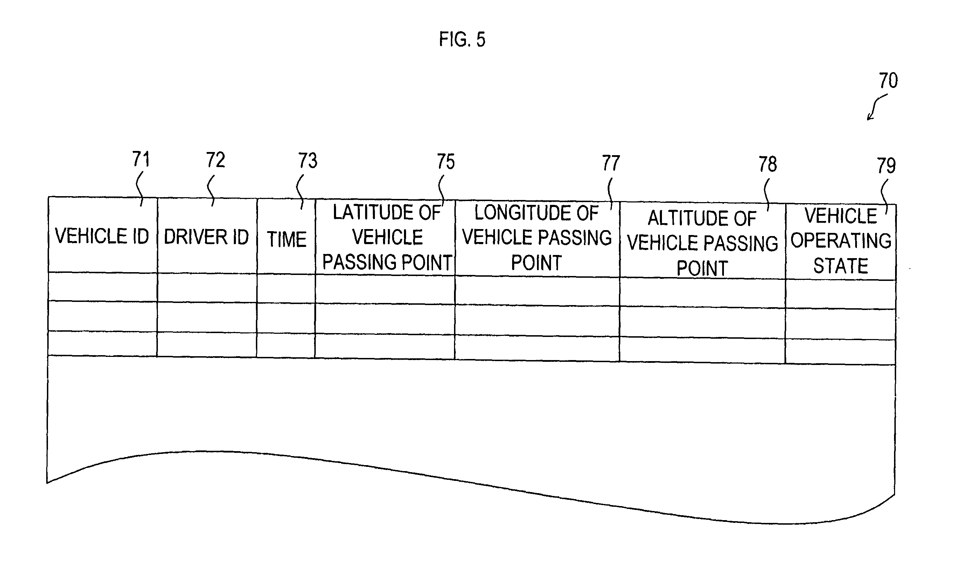

The storage unit 63 is provided with data tables 70, 80, 90, 100, 110 and storage media for storing data such as setting data 701, 703, 120, 122, 130 and so on, as shown in later-explained Figs. 5 to 15.

The communication processing portion 65 communicates with the vehicle 7 having the on-vehicle machine 11 or later-explained on-vehicle machine 130, directly or via the communication satellite 30, etc. on one hand, and transmits charge collection processing data per driver ID code or per driver to the financial institution 22 on the other hand.

The charge collection processing portion 67 analyzes the traveling vehicle position history data to specify the toll road traveling section in which the vehicle has traveled and calculate a charge, and performs a charge collection process with the financial institution 22.

Next, the data tables shown in Figs. 5 to 15 are described.

The vehicle data table 70 shown in Fig. 5 is a data table created per vehicle in the storage unit 63 of the system data center 20. It is for storing the vehicle traveling position history data and vehicle operating state data together with the time data. The vehicle data table 70 is provided with a vehicle ID storage area 71 for storing vehicle ID codes for specifying respective vehicles, a driver ID storage area 72 for storing driver ID codes for identifying each driver, a time data storage area 73 for storing time data (year, day, hour, minute, second), a vehicle passing point latitude data storage area 75, a vehicle passing point longitude data storage area 77 and a vehicle passing point altitude data storage area 78 for respectively storing vehicle traveling position history data, that is, latitude data, longitude data and altitude data of the passing point of the vehicle, and a vehicle operating state data storage area 79 for storing operating state parameters of each operating portion of the vehicle. One record comprises a set of data from the vehicle ID code 71 to the vehicle operating state data 79. One vehicle data table 70 is created per vehicle or vehicle ID code.

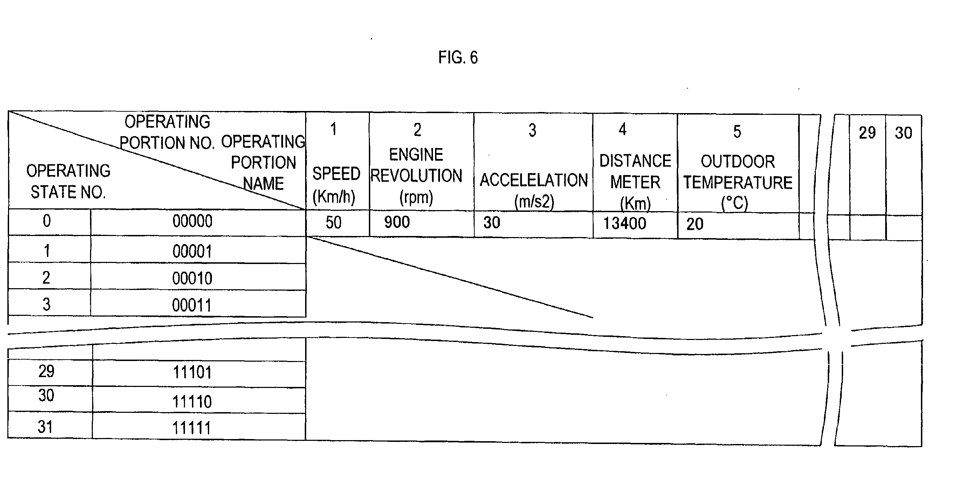

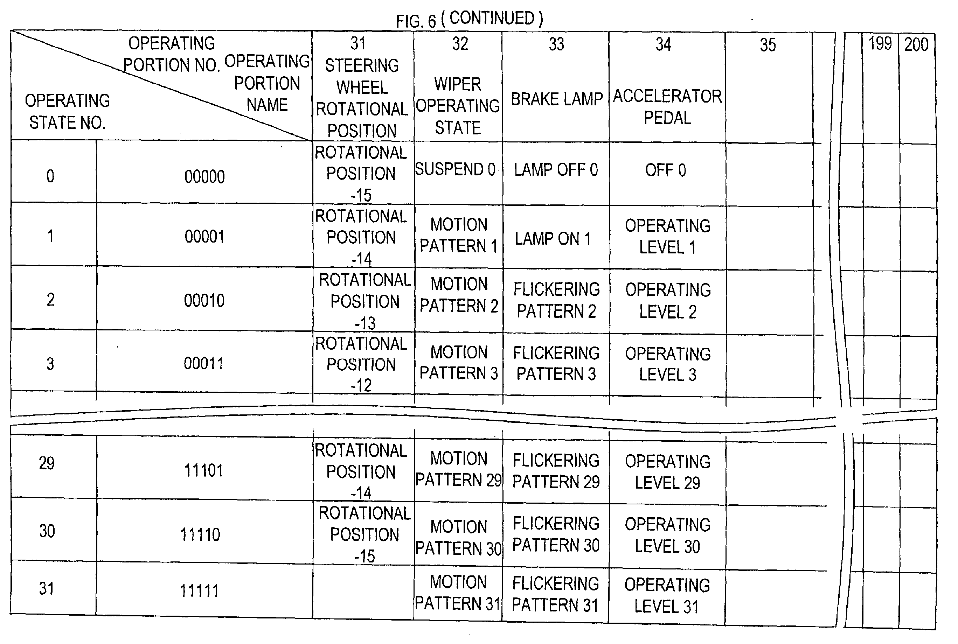

In a vehicle operating state number setting list 701 shown in Fig. 6, vehicle operating state parameters stored in the vehicle operating state data storage area 79 of the vehicle data table 70 shown in the above Fig. 5 are associated with operating portion numbers corresponding to a plurality of operating portions in a vehicle and operating state numbers corresponding to possible operating states of the respective operating portions. The possible states of the respective operating portions are associated with the operating state numbers.

As an example, the sum of the operating portions of the vehicle is set to be 200, and the sum of the possible operating states of the respective operating portions is set to be 32. In the present embodiment, numeric values in decimal digit express the possible operating states of the operating portions numbered from the 1^{st} to 30^{th} among the 200 operating portions, and 5 bits in binary digit express the operating states of the operating portions numbered from 31^{st} to 200^{th}. The operating states of the respective operating portions can be represented by a total of 32 states from 0 to 31. The sum of the operating portions and that of the operating states may be varied as required.

In this example, data of the operating portion No. 1 is a numeric value in decimal digit which represents the vehicle speed, and data of the operating portion No. 32 is expressed in numeric value in binary digit which represents the wiper operating state. In the latter case, a total of 32 states, namely, "suspend 0", "motion pattern 1", "motion pattern 2", "motion pattern 3", ..., "motion pattern 31" are set in advance and expressed as "00000" "00001" "00010" "00011" ... "11111", respectively. The operating states of the respective vehicle operating portions are sampled at a predetermined time interval and digitized. Thus, the states of the respective vehicle portions which are changing from moment to moment are collected.

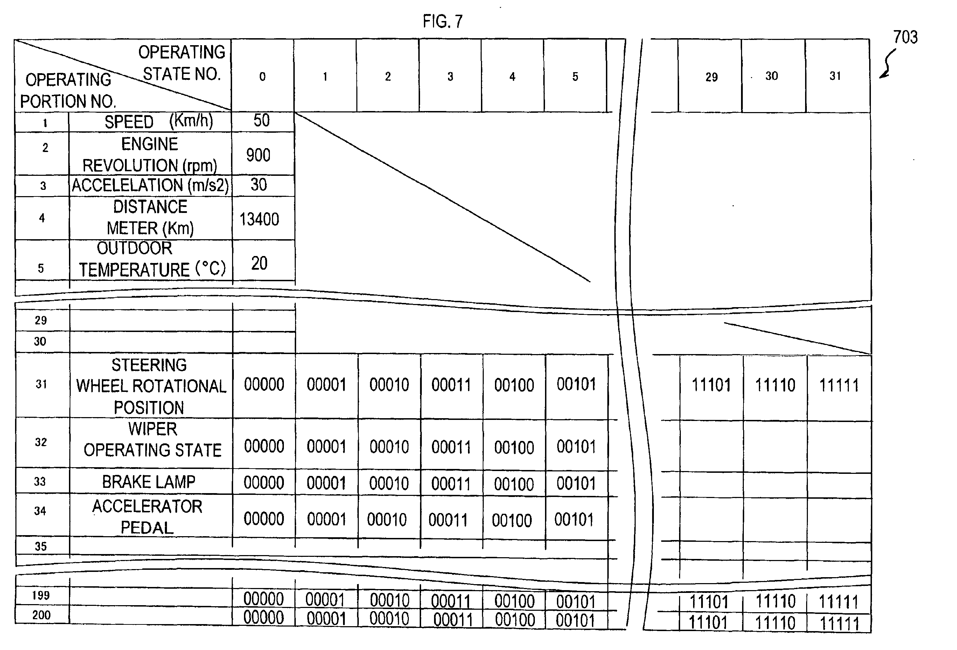

The vehicle operating state setting data list 703 shown in Fig. 7 is a list showing particular vehicle operating state setting data. This is an example of a list in which the operating portion numbers are associated with the operating state numbers to express the vehicle operation states in numeric values.

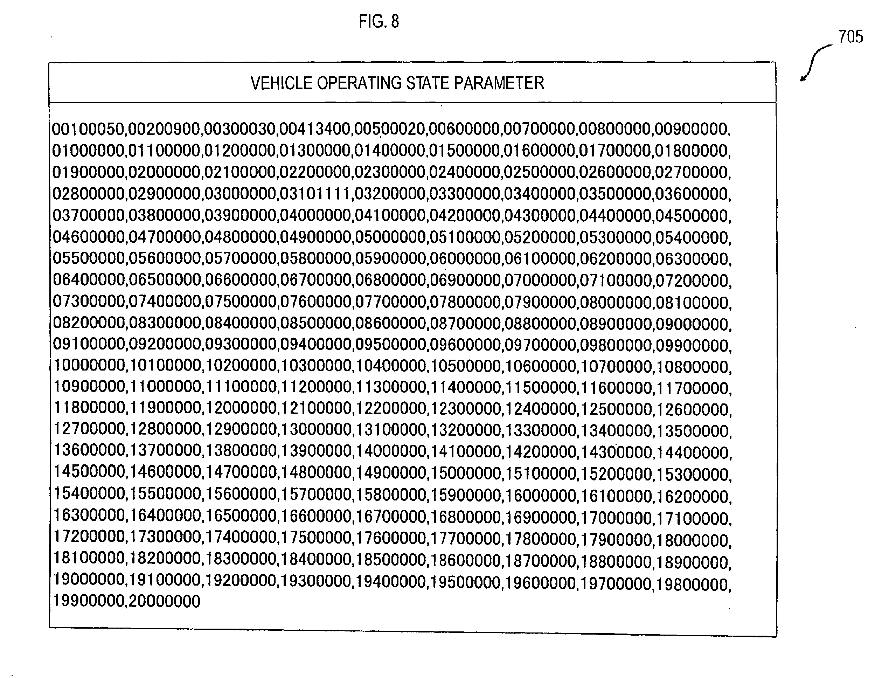

Fig. 8 is a particular example of vehicle operation state parameters 705 stored in the vehicle operating state data storage area 79 of the vehicle data table 70 shown in Fig. 5. Comma-delimited text data is used as the data format.

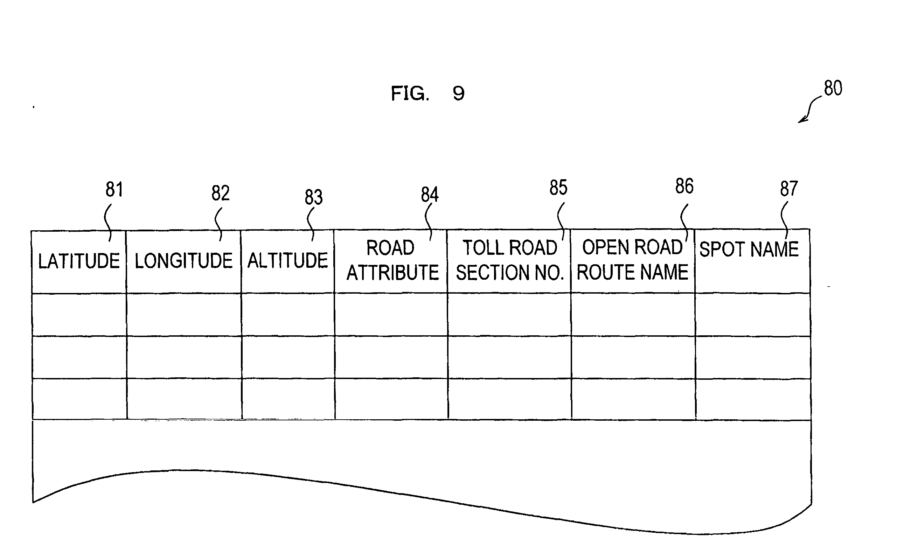

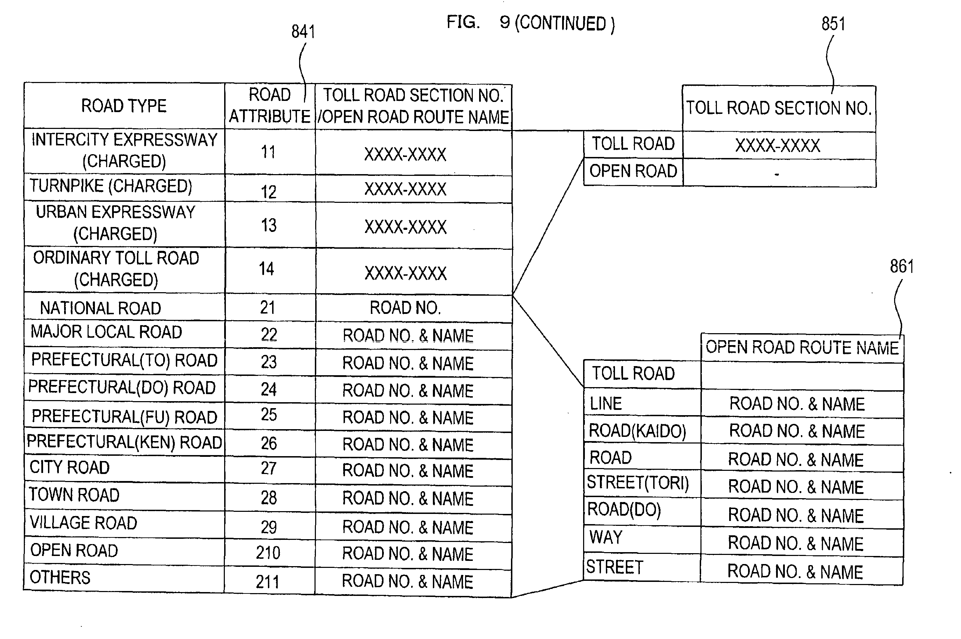

A nationwide all-road database 80 shown in Fig. 9 is a database to be referred to, when it is determined in which road the vehicle has traveled, based on the latitude, the longitude and the altitude at which the vehicle has traveled. It stores road characteristics and location information for all the motor roads across the country regardless of the road type: a toll road or an open road. Particularly, the data of a spot in a road on a nationwide road map, namely, latitude, longitude, altitude, road attribute, toll road section number or open road route name, and address, are collected as a spot name. The nationwide all-road database 80 is created by storing these data.

The nationwide all-road database 80 is provided with a latitude data storage area 81 for storing latitude, a longitude data storage area 82 for storing longitude, an altitude data storage area 83 for storing altitude, a road attribute storage area 84 for storing road attribute numeric symbol 841 data which indicates a type of a toll road such as an intercity expressway, a turnpike, etc. or a type of an open road such as a prefectural road, etc. expressed as a predetermined numeric symbol, a toll road section number data storage area 85 for storing a toll road section number 851 indicating which section of a toll road, an open road route name data storage area 86 for storing an open road route name 861, and a spot name data storage area 87 for storing an address of a spot as data for specifying the spot.

Here, the altitude data to be stored in the altitude data storage area 83 are also collected when the latitude data and the longitude data are collected, i.e., when the nationwide all-road database 80 is created. After the present toll road charge collection system begins its operation, however, the altitude data is included in the data transmitted from a plurality of the vehicles 7 to the system data center and stored in the vehicle data table 70, in addition to the vehicle passing point latitude data and the vehicle passing point longitude data. Therefore, while the system is in operation, the data of the nationwide all-road database 80 may be upgraded by data correction resulted from comparison between the altitude data at each spot of the roads received from the plurality of vehicles 7 and the altitude data stored in the altitude data storage area 83 of the nationwide all-road database 80 created in advance. The latitude data and the longitude data can be also corrected while the system is in operation, in order to build an accurate nationwide all-road database 80 in the charge collection system.

The altitude data is advantageous in that it renders possible to determine in which of a toll road or an open road a vehicle is traveling when the toll road and the open road are running in parallel but the former running above the latter, since most of the toll roads have an elevated structure.

In principle, the vehicle position should not be perceived in two dimensions, but in three dimensions including the altitude. It is preferable that all the vehicle positions, such as on the mountains, at the coast, intermediate position in a climb, intermediate position in a spiral ramp of an interchange, are perceived in three dimensions.

In order to obtain the altitude data, the GPS information processing portion 55 of the on-vehicle machine has to capture more number of GPS satellites 1 than the satellites necessary to obtain the latitude data and the longitude data. Accordingly, it is preferable that the GPS information processing portion 55 have high radio signal capturing efficiency as well as high calculation efficiency for obtaining the latitude, longitude and altitude data from the received radio signal data.

As shown in an example of Fig. 9, each road type has an initial number depending on the road type: "1" in case of a toll road and "2" in case of an open road. The number is then added with a serial number, so that various road types of toll roads and open roads can be represented in the road attribute numeric symbol 841.

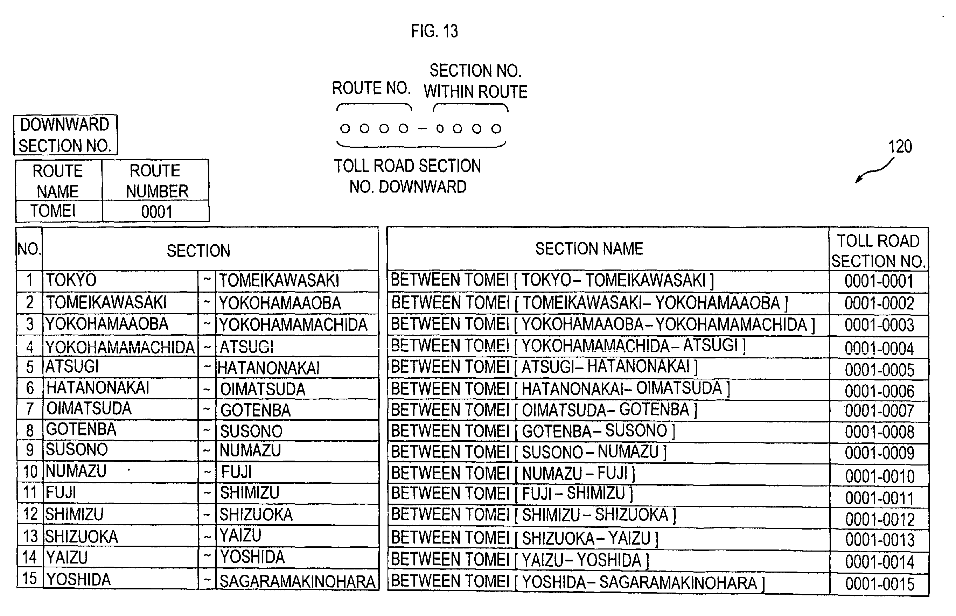

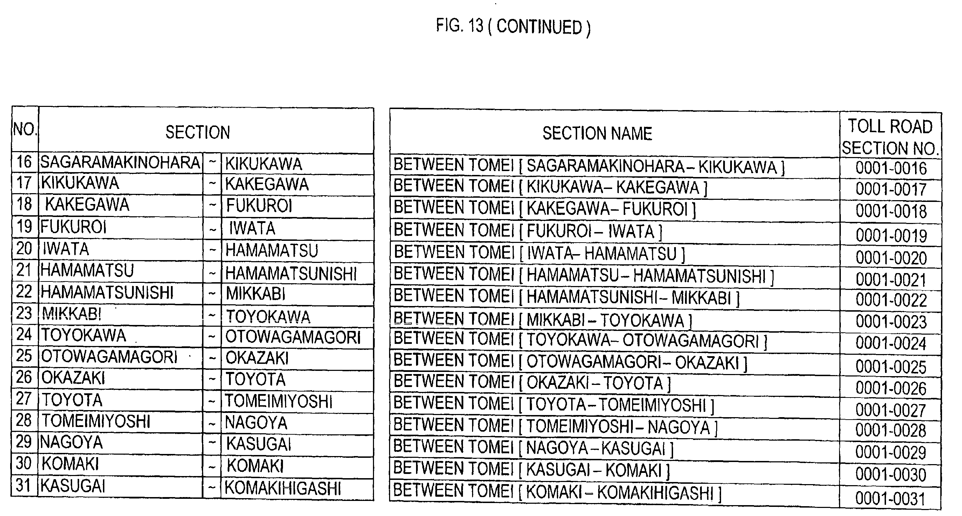

Now, a description is provided regarding the toll road section number 851 which represents every toll road in a unique number. As shown in Fig. 13, each route of toll roads is given a 4-digit number as a route number. Each section of the route is given a serial number as a section number within the route. The route number and the section number within the route are connected to each other using a hyphen '-'. A 9-digit number "XXXX-XXXX" thus created represents a specific section between an interchange and the next interchange in every toll road across Japan in a unique number.

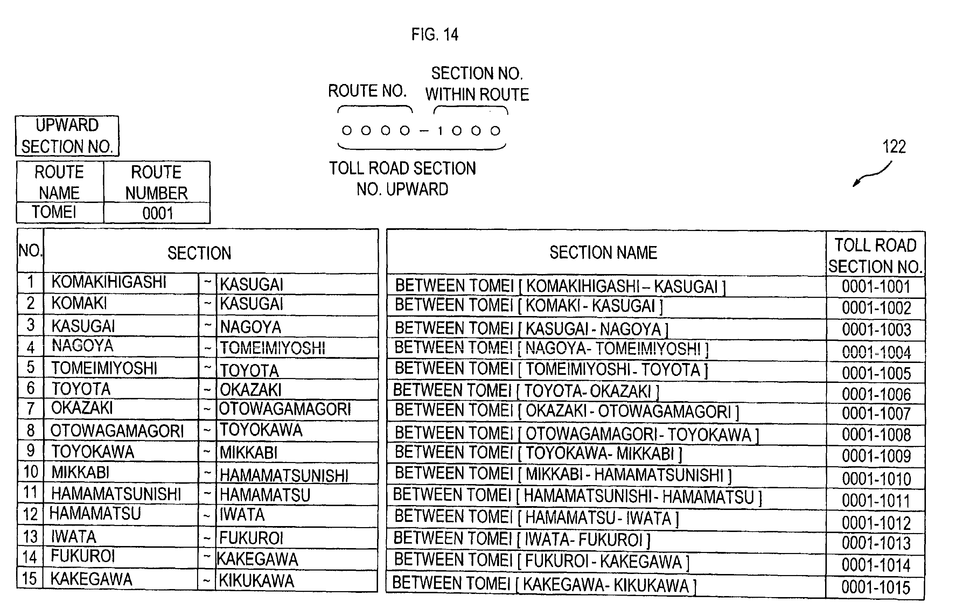

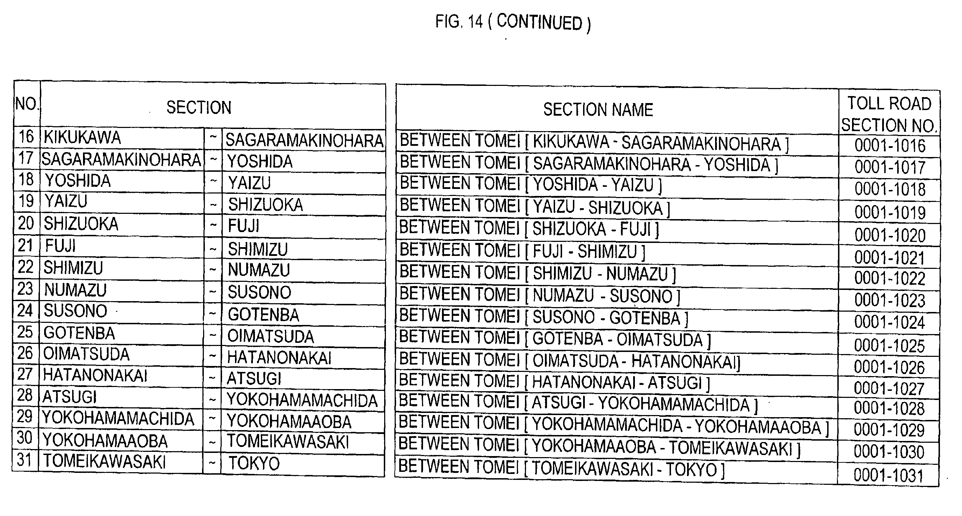

For example, all the toll roads are respectively given a 4-digit route number "XXXX" as a route name like Tomei "0001", Meishin "0002", Chuo "0003", etc. Then, a section between an interchange and the next interchange in the route is given a section number within the route "XXXX". Here, the section number started with '0' represents a "downward route number" and the section number started with '1' represents an "upward route number". Fig. 13 shows a downward toll road section number list 120 in Tomei Expressway. Fig. 14 shows an upward toll road section number list 122 in Tomei Expressway.

Particularly, for example, a downward section between "Oimatsuda and Gotenba" in Tomei is represented as "0001-0007", and a downward section between "Komaki and Komakihigashi" in Meishin is represented as "0002-0001". On the other hand, an upward section between "Gotenba and Oimatsuda" is represented as "0001-1025". As to a section residing within two routes across a junction, the data to the next interchange is mutually held as the toll road section number within the respective routes so that the section can be referred to from both of the routes.

On the other hand, as to an open road, a "route number" such as Route XX or a "road name" such as XX Road is digitalized as open road route name data so as to represent the open road route name 861.

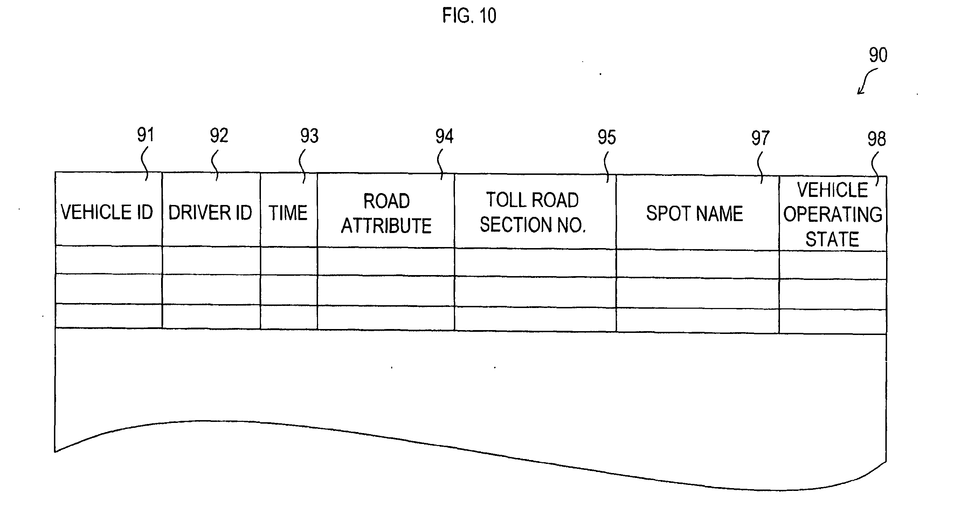

A toll road traveling section number data storage table 90 shown in Fig. 10 is a data storage table generated with the traveling data of vehicles on toll roads within the vehicle entire traveling position history data. One passing path of a toll road, that is, a section pass history from an entrance interchange to an exit interchange of a toll road is shown with toll road section number data. The toll road traveling section number data storage table 90 is provided with a vehicle ID storage area for storing a vehicle ID code; a driver ID storage area 92 for storing a driver ID code, a time data storage area 93 for storing time data (year, month, day, hour, minute, second), a road attribute storage area 94 for storing a road attribute, that is, the road attribute numeric symbol 841 of intercity expressways, turnpikes, urban expressways, open roads, etc., a toll road section number data storage area 95 for storing an upward or downward toll road section number, a spot name data storage area 97 for storing address data as a spot name representing a vehicle passing position, and a vehicle operating state data storage area 98 for storing the vehicle operation state parameter. The toll road section number data expressed as "XXXX-XXXX", starting from a toll road entrance section followed by sections in a traveling order to an exit section, are stored in the toll road section number storage area 95 per vehicle ID code 91.

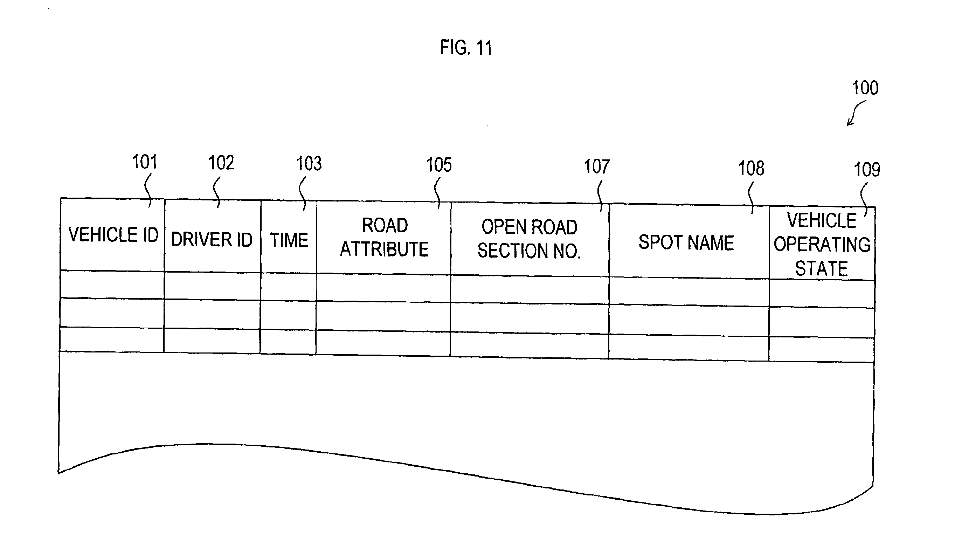

An open road traveling vehicle position data storage table 100 shown in Fig. 11 is a data storage table for storing the traveling vehicle position data except for toll roads, that is, in open roads in which the vehicle 7 has traveled. The open road traveling vehicle position data storage table 100 is provided with a vehicle ID storage area 101 for storing the vehicle ID code, a driver ID storage area 102 for storing the driver ID code, a time data storage area 103 for storing time data (year, month, day, hour, minute, second), a road attribute storage area 105 for storing a road attribute, that is, the road attribute numeric symbol of national roads, prefectural roads, local roads, etc., an open road route name storage area 107 for storing a route number such as Route XX in case of national road or a road name such as XX Road, as the open road route number 861, a spot name data storage area 108 for storing address data as a spot name representing a vehicle passing position, and a vehicle operating state data storage area 109 for storing the vehicle operation state parameter.

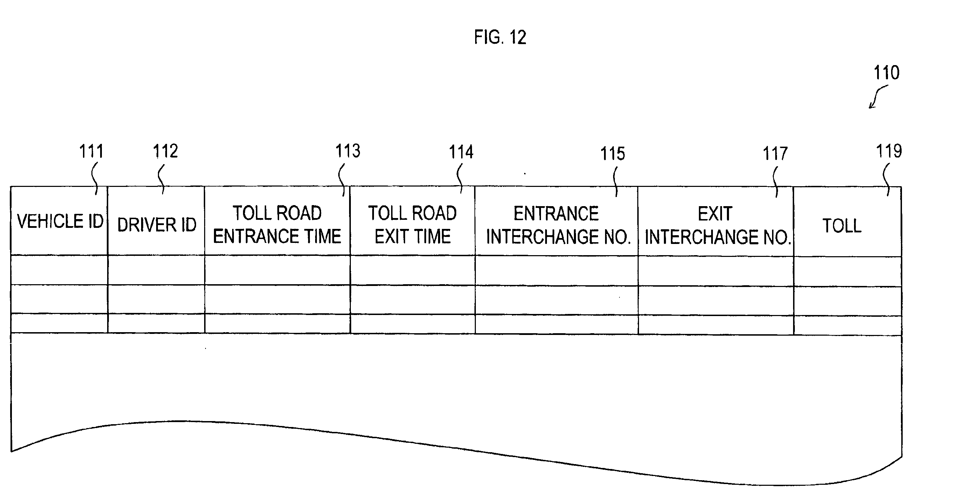

A charge collection data table 110 shown in Fig. 12 is for storing data for charge collection when the vehicle 7 has traveled in a toll road. It is provided with a vehicle ID storage area 111 for storing the vehicle ID code, a driver ID storage area 112 for storing the driver's ID code, a toll road entrance time data storage area 113 for storing time data (year, month, day, hour, minute, second) when the vehicle has entered the toll road, a toll road exit time data storage area 114 for storing time data (year, month, day, hour, minute, second) when the vehicle has exited from the toll road; an entrance interchange number data storage area 115 for storing an entrance interchange number, that is, an interchange at the entrance of the first toll road traveling section, an exit interchange number data storage area 117 for storing an exit interchange number, that is, an interchange at the exit of the last toll road traveling section, and a charge data storage area 119 for storing traveling charge data obtained by charge calculation from the entrance to the exit. These data are stored per vehicle ID code when the vehicle has traveled from the toll road entrance to the exit. There may be a case in which there are two or more drivers taking turns driving on a toll road, which may cause a plurality of driver ID codes. In this case, the charge collection affects the account of a financial institution which is set at the entrance interchange with the driver license including the driver ID code.

A toll road section number downward table 120 shown in Fig. 13 is a toll road section number downward list in which a route number of each toll road route is expressed in 4-digit number, and each section of the route is given a serial number. It is an example of the downward Tomei Expressway.

A toll road section number upward table 122 shown in Fig. 14 is a toll road section number upward list in which a route number of each toll road route is expressed in 4-digit number, and each section of the route is given a serial number. It is an example of the upward Tomei Expressway.

Here, a description of a toll road interchange number is provided, which can represent all the interchanges on toll roads in a unique number.

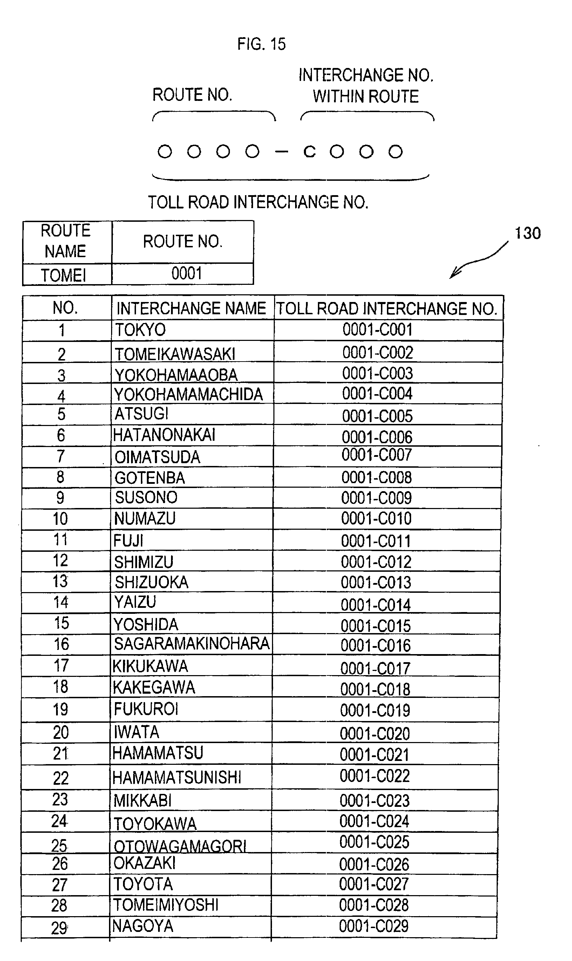

A toll road interchange number table 130 shown in Fig. 15 as an example is a list showing interchange numbers of Tomei Expressway. A route number of each toll road route name is expressed in 4-digit number. An interchange number is expressed with the route number followed by a hyphen '-', further combining a letter 'C' of an interchange "IC" to be distinguished from a section number and a serial number thereafter, so that it reads "XXXX-CXXX". In this way, all the interchanges in toll roads can be expressed with unique numbers, respectively. For example, "Gotenba Interchange" in Tomei is expressed as "0001-C008", and "Komaki Interchange" in Meishin is expressed as "0002-C001".

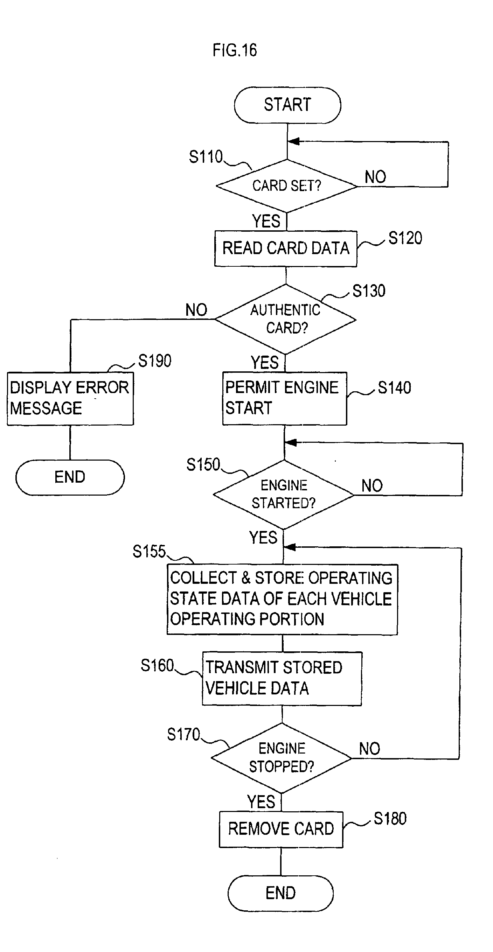

Fig. 16 is a flowchart for explaining operation of the on-vehicle machine 11 shown in Fig. 3. Now, referring to Fig. 16, the operation of the on-vehicle machine 11 of the vehicle 7 is described.

The on-vehicle machine 11 is powered and starts its operation when the ignition key is inserted and turned from the OFF position to ON position. Firstly, it is determined in step S110 whether the driver license card 50 is inserted into the card function processing portion 51. When the driver license card 50 is set, the process proceeds to step S120 and the driver ID code together with card storage data such as data relating to the driver license is read from the driver license card 50. The process proceeds to step S130 and it is determined whether the card inserted and read is an authentic driver license card. If the card is not an authentic driver license card, the process jumps to step S190, and ends after displaying an error message on the display portion 47.

When it is determined in step S130 that the card is an authentic driver license card, the process proceeds to step S140 and the engine is started since it has been permitted.

In the next step S150, it is determined whether the engine is started. When the engine is started, the vehicle position data and the operating state data of the respective vehicle operating portions collected at predetermined sampling intervals as the vehicle data are stored in the external storage unit 46 together with the time data as a log file in step S155. These data are added with the vehicle ID code and the driver ID code in step S160, and are transmitted to the system data center 20 via the communication functioning portion 57. The vehicle ID code is stored in advance in the ROM 43 of the on-vehicle machine and read as required. The driver ID code is read from the driver license card 50 capable of storing data, which is set in the on-vehicle machine.

The time interval for collecting data to store the vehicle position data and the vehicle operating state parameter in the external storage unit 46 may be set to any one of 0.05, 0.1, 0.3, 0.5, 1 second(s). It is preferable that such a sampling interval is an essential and maximum time interval to obtain the operating state of the respective operating portions of the vehicle. With this concept, it is also possible to set an appropriate sampling interval for each of the vehicle operating portions to obtain the operating states. Accordingly, the system data center 20 is equipped as much a scale as to process the amount of data transmitted from a plurality of vehicles 7.

In the system data center 20, the vehicle position data and vehicle operating state data are transmitted from a plurality of vehicles together with the time data, and one vehicle data table 70 is created for one vehicle ID to respectively store/accumulate the data. Accordingly, in the system data center 20, the vehicle position data varying constantly and vehicle operating state data showing the operating state are stored/accumulated as time-series data in the vehicle data table 70 created per vehicle ID.

When the aforementioned infrastructures are promoted and 24-hour connection becomes practical, the maximum time interval for data transmission necessary to utilize the data as later-explained realtime road congestion state data becomes equal to the time interval for data transmission from the vehicle to the system data center 20. Till then, the required maximum time interval is defined to be any interval for vehicle data transmission to the system data center 20. It is preferable that the time interval for the data which is large in file size such as tire image data is set long. In a similar manner, the data transmission interval to the system data center 20 may be set individually as appropriate to the respective vehicle operating portions.

Returning to the operation flow, it is then determined in step S170 whether the engine is stopped. If the engine is not stopped, the process returns to step S155, and the operation for collection/storage of the vehicle operating state data and transmission of the stored vehicle data in step S160 are continued. If it is determined in step S170 that the engine is stopped, the process proceeds to step S180, and the card can then be removable physically. When the card is removed, the operation ends.

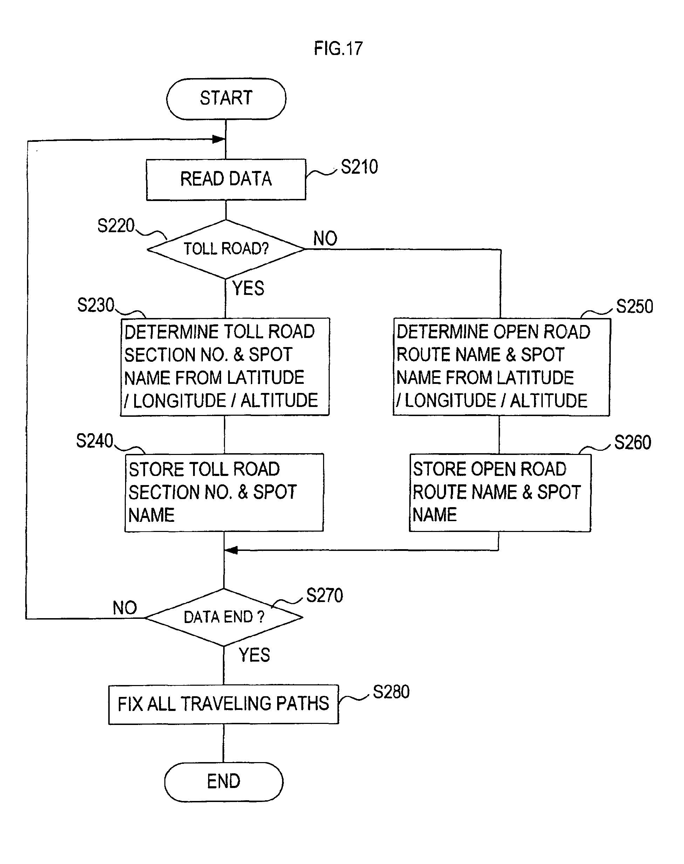

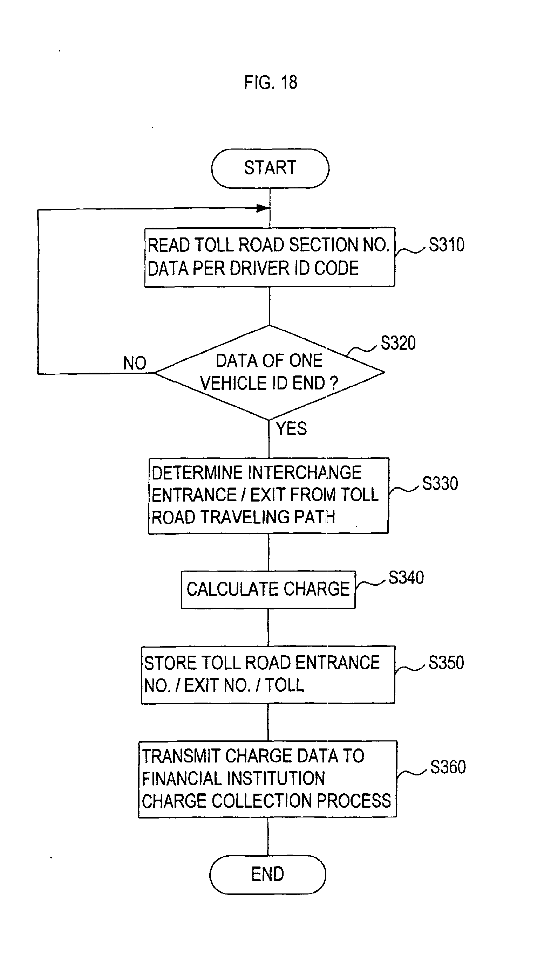

Figs. 17 and 18 are flowcharts for explaining a data processing method of the vehicle data table 70 which includes data transmitted from the vehicle in the system data center 20. Firstly, a process for determining a toll road section number and a spot name, or an open road route name and a spot name, is explained, referring to Fig. 17.

In step S210, the data is read from the vehicle data table 70. The vehicle data table 70 is created per on-vehicle machine, that is, per vehicle ID. Reading of the data is performed in succession per record.

In the next step S220, the nationwide all-road database 80 shown in Fig. 9 is referred to, based on the latitude data, the longitude data or the altitude data, for determination of the road type as the road attribute. From the road type, whether the road is a toll road or an open road is known. If it is a toll road, the process proceeds to step S230. The nationwide all-road database 80 shown in Fig. 9 is referred to, based on the read data, and the toll road section number expressed as XXXX-XXXX and the spot name are determined. In step S240, each data is stored in a vehicle ID storage area 91, a driver ID storage area 92, a time data storage area 93, a road attribute storage area 94, a toll road section number data storage area 95, a spot name data storage area 97 and a vehicle operating state data storage area 98, of the toll road traveling section number data storage table 90 shown in Fig. 10.

On the other hand, when it is determined in step S220 that the road is an open road, the process moves to step S250. The nationwide all-road database 80 shown in Fig. 9 is searched for the data read in step S210, and the road type such as a national road, prefectural road, etc. is specified from the road attribute. The route number or road name and the spot name as an open road route name is further specified. In step S260, each data is stored in a vehicle ID storage area 101, a driver ID storage area 102, a time data storage area 103, a road attribute storage area 105, an open road route name data storage area 107, a spot name data storage area 108 and a vehicle operating state data storage area 109, of the toll road traveling section number data storage table 90 shown in Fig. 11.

In the next step S270, it is determined whether all the data in the vehicle data table 70 for one vehicle ID is read. If all the data is not read, the process returns to step S210 and the aforementioned operation is repeated. If all the data is read, the process moves to step S280. After the data are respectively stored in the toll road traveling section number data storage table 90 as toll road traveling vehicle position data and in the open road traveling vehicle position data storage table 100 as open road traveling vehicle position data, so that all the traveling vehicle positions are fixed, the process ends.

In this manner, the vehicle traveling data per vehicle are stored as the traveling vehicle position history data of the respective vehicles in the toll road traveling section number data storage table 90 shown in Fig. 10 and in the open road traveling vehicle position data storage table 100 shown in Fig. 11.

Now, referring to Fig. 18, a charge calculation process and a charge collection process performed in the system data center 20 are explained.

Firstly in step S310, the toll road section number data is read from the toll road traveling section number data storage table 90 shown in Fig. 10 per driver ID code 92 included in one vehicle ID code 91. After all the data for one driver ID code 92 has been read, it is determined in step S320 whether all the data for one vehicle ID has been read. If there is still remaining data, the operation moves to data for the next driver ID code 92, reads the data per driver ID code 92, and it is then determined whether all the data for one vehicle ID has been read. When there is no more data found, analysis of the toll road traveling vehicle positions is performed in step S330. That is, an entrance interchange number corresponding to the entrance-side section and an exit interchange number corresponding to the exit-side section are searched in the toll road interchange number table 130 shown in Fig. 15 respectively as the first toll road section number and the last toll road section number of the toll road in which the vehicle has traveled, taking into account whether the route is upward or downward based on the route number. The entrance interchange number as the entrance interchange and the exit interchange number as the exit interchange at the time the vehicle has traveled in the toll road are found.

In the next step S340, a traveling charge from the entrance interchange to the exit interchange is calculated based on the toll road traveling charges defined per vehicle type. In the next step S350, each data is stored in a vehicle ID storage area 111, a driver ID storage area 112, a toll road entrance time data storage area 113, a toll road exit time data storage area 114, an entrance interchange number data storage area 115 and an exit interchange number data storage area 117, and the calculated charge is stored in a charge data storage area 119, of the charge collection data table 110 shown in Fig. 12, per driver ID in the vehicle ID. The charge is collected from the account of the financial institution set at the entrance interchange with the driver license including the driver ID.

Next in step S360, the data necessary to collect the charge is transmitted to the financial institution 22. The system data center 20 transmits the data in the charge collection data table 110 shown in Fig. 12 via the communication processing portion 65 to the financial institution after performing charge calculation per driver ID at the entrance interchange, that is, per owner of the driver license set in the on-vehicle machine at the entrance interchange. In the financial institution 22, the charge is collected by automatic payment through the account set for the payment by the owner of the driver license when the on-vehicle machine is mounted, and a receipt is dispatched to the address designated by the owner of the driver license.

The aforementioned reading of data from the charge collection data table 110 and charge calculation process are conducted per specific time frame. For example, if the data for the last one month is read on the 20^{th} day every month, the charge collection process for the toll road traveling charge during the last one month can be performed. In the above embodiment, the charge is imposed on the owner of the driver license. However, if the vehicle is a commercial vehicle, the charge may be imposed on the company, etc. which is the owner of the vehicle. In this case, the charge collection process can be performed not per driver ID code but per vehicle ID upon prior request.

With the above process, charge collection in toll roads can be performed completely automatically, and customer service to toll road traveling persons can be improved. In other words, facilities like a toll booth, tollgate, etc. are no more necessary. In addition, the traveling persons only become aware that they are passing through a toll road at the entrance and exit, and can pass on without going through any formalities. The facilities and the human operation can be substantially simplified, and the traffic congestion around the entrance and exit and toll booths of the toll road can be mostly eased.

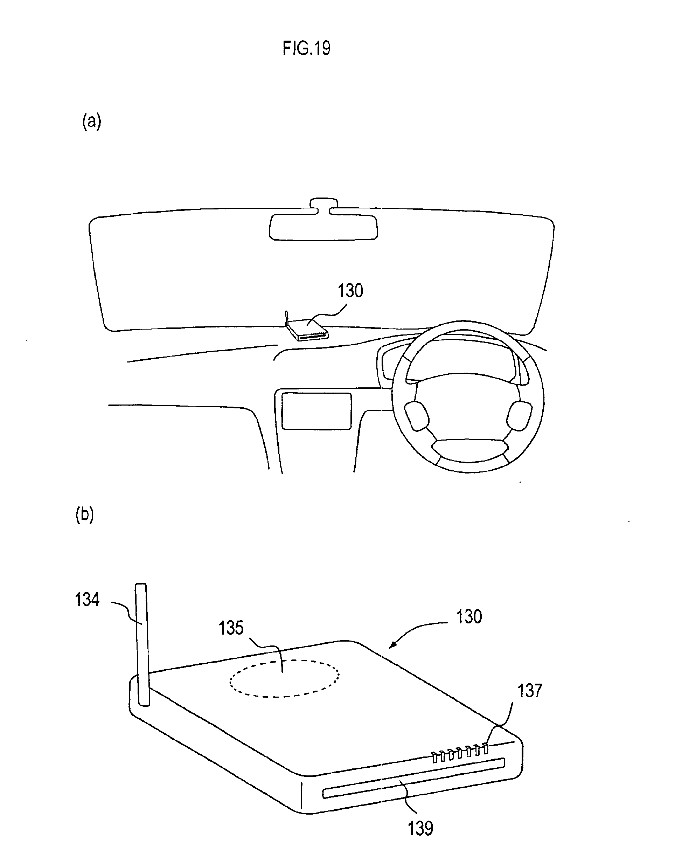

Figs. 19(a) and 19(b) are diagrams showing an example of the on-vehicle machine of a single type functioning independent of the vehicle navigation feature. Fig. (a) shows the on-vehicle machine attached to the dashboard of the vehicle, and Fig. (b) shows the external appearance of the on-vehicle machine. On the front face of the on-vehicle machine 130, a card reader slot 139 is provided for the driver license card 50. Above the front face, an LED lamp 137 indicating the operating states such as "power" "operation" "operation error" "data storage" "data transmission" "GPS radiowave reception" "driver license verification" etc. is provided. Furthermore, on the top of the on-vehicle machine, a GPS antenna 135 is installed, and on the side face thereof, an antenna 134 for the communication functioning portion 57 is installed. The on-vehicle machine 130 reads the driver ID code and data relating to the driver license from the driver license card 50 inserted into the card reader slot 139. The on-vehicle machine 130 stores/accumulates the latitude data, the longitude data, and the altitude data calculated based on a plurality radio signal received from some GPS satellites via the GPS antenna 135 together with the time data obtained from the clock 43 in the respective external storage units 46, and transmit the same to the system data center 20 via the communication functioning portion 57. The ID code of the on-vehicle machine is stored in the ROM 43 at the time when the on-vehicle machine 130 is manufactured at a factory. Accordingly, the ID code of the on-vehicle machine 130 which is stored in the ROM 43 is the vehicle ID code of the vehicle 7 mounting the on-vehicle machine 130 thereon.

The on-vehicle machine is made nondetachable. A signal cable for use in determining whether to permit the engine to be started, etc. is connected to the power supply portion 59 via a power cable, and powered by the battery of the vehicle.

Registration of the vehicle type is performed when a new vehicle is purchased or when the on-vehicle machine 130 is bought and mounted on the vehicle, as in the case of the on-vehicle machine 11 with a vehicle navigation feature.

Now, how to use vehicle operating state parameters representing the vehicle operating states is explained.

The on-vehicle machine 11 combined with the vehicle navigation feature and built in to the center console panel 12 comprises the vehicle information processing portion 53 for collecting the vehicle operating state parameters from the respective operating portions of the vehicle. The vehicle operating state data representing these operating states of the vehicle is transmitted to the system data center 20 to be stored/accumulated as time-series data. Therefore, it is possible to provide the following services to the driver and the owner of the vehicle using the stored/accumulated data:

### (1) In a way pertaining to hardware

It is possible to detect whether any malfunction has occurred to the vehicle by determining whether the data representing the operating states of the respective portions of the vehicle is appropriate by a diagnosis program. If any malfunction is detected, the vehicle owner specified by the vehicle ID code is notified of necessity of maintenance, and thus security levels of the vehicle can be increased.

### (2) In a way pertaining to software

In the storage unit 63 of the system data center 20, the position data of the vehicle, time data and the vehicle operating state data obtained from the respective portions of the vehicle are stored.

The nationwide all-road database 80 is designed to have three-dimensional data which includes altitude data as road geographical data. Therefore, it is possible to determine whether the road is upslope or downslope, or if the slope is steep or gentle, by tracing the data.

Diagnosis of the driver's driving technique of the driver is possible by analyzing the aforementioned vehicle operating state data and data of the nationwide all-road database 80 along with the time data using the analysis program. By giving appropriate advice according to the driving technique of each driver, it is possible to increase security levels.

The diagnosis to the driver may be provided by way of a memorandum to a driver, which is sent to the driver at the time the receipt of the toll road traveling charge is dispatched. The memorandum may include the following information, for example:

1) place and time, or index level, when the vehicle has traveled over the speed limit;

2) place, time and number of times, or index level, when the vehicle changed lanes where a lane change is prohibited;

3) properness of speed, lane change, operation of turning signals, etc. when the vehicle has turned left or right;

4) diagnosis on high-speed traveling, sudden acceleration and sudden start, and simulation concerning fuel consumption and environmental pollution in the event that the high-speed traveling, etc. are inhibited;

5) properness of gear selection and speed in upslope, and of engine braking and foot braking in downslope;

6) properness, or index level, of stopping at a stop line;

7) diagnosis on properness in operation of steering, acceleration, gear change, braking, engine braking, etc. in urban areas or on curvy roads in suburbs;

8) record on not wearing a seat belt;

9) diagnosis on a level of observance to each road sign;

10) comprehensive driving technique evaluation; and

11) accurate accreditation of gold license, etc.

In further development, it is possible to perform personality check using psychoanalysis. Since the diagnosis is sent periodically together with the toll road receipt, the driver can check the mental health on the respective occasions by comparing the current data with the data previously received. The driver can also pay attention to the mental health.

Furthermore, a realtime congestion state can be obtained by comprehensively making analysis based on information on the position of each vehicle, traveling direction and vehicle speed transmitted from a plurality of vehicles in the system data center 20. The result of the analysis is transmitted to each vehicle, and in each vehicle, the transmitted realtime road congestion state data and the road position data stored in advance as a vehicle navigation feature are analyzed together to obtain the optimal traveling path to the destination in the congestion state at the time.

It is possible to monitor whether it is raining and how heavily it rains in which area, based on wiper operating state data transmitted from each vehicle, that is, whether the wiper is operated and based on later-explained wiper motion pattern data if the wiper is operated. The raining state information can be transmitted to each vehicle, and also supplied to a weather forecast company, etc.

Now, new techniques relating to various equipment of the vehicle are explained. These techniques can be adapted to the vehicles for use in the aforementioned charge collection system. However, the techniques can be also adapted to vehicles for use in other than the charge collection system.

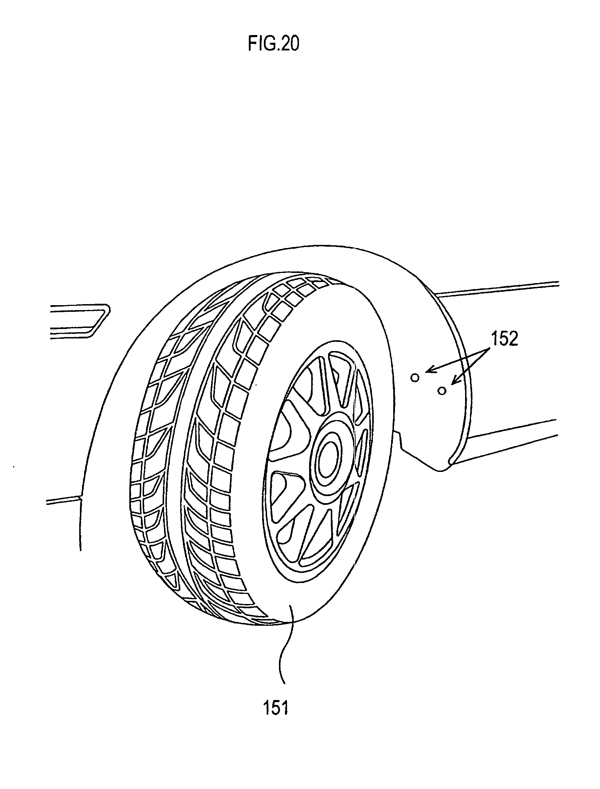

As shown in Fig. 20, in order to detect a deterioration state in tires, the images of the tire running surface obtained by two cameras 152 attached in the vicinity of the tire 151 are transmitted to the system data center 20. In the system data center 20, a deterioration state is detected using three-dimensional image pattern recognition. Appropriate maintenance of the tire is possible by notifying the owner of the vehicle of the damage as required, and of rotation time or replacement time of the tire. Detection of the deterioration state may be performed in the MPU of the vehicle 7 without transmitting the images to the system data center 20, and the owner of the driver may be directly notified of the deterioration via the display portion 47, etc. of the on-vehicle machine 11.

The image data files obtained by imaging the tire running surface necessary to detect a tire deterioration state are large in data size. Therefore, it is difficult to transmit them together with other vehicle operating parameters to the system data center 20. Accordingly, it is preferable that the transmission of the image data is conducted only once after the engine start and stop are repeated predetermined times. In the best mode, if the diagnosis by the tire diagnosis program using image pattern recognition is performed in the MPU of the vehicle 7, it is possible to diagnose each face of the tire running surface every time the vehicle is stopped, for example. The result of the diagnosis is set as a tire state detection parameter which is one of the vehicle operating state parameters, and the tire image data files are sent to the system data center 20 only when some malfunction is detected.

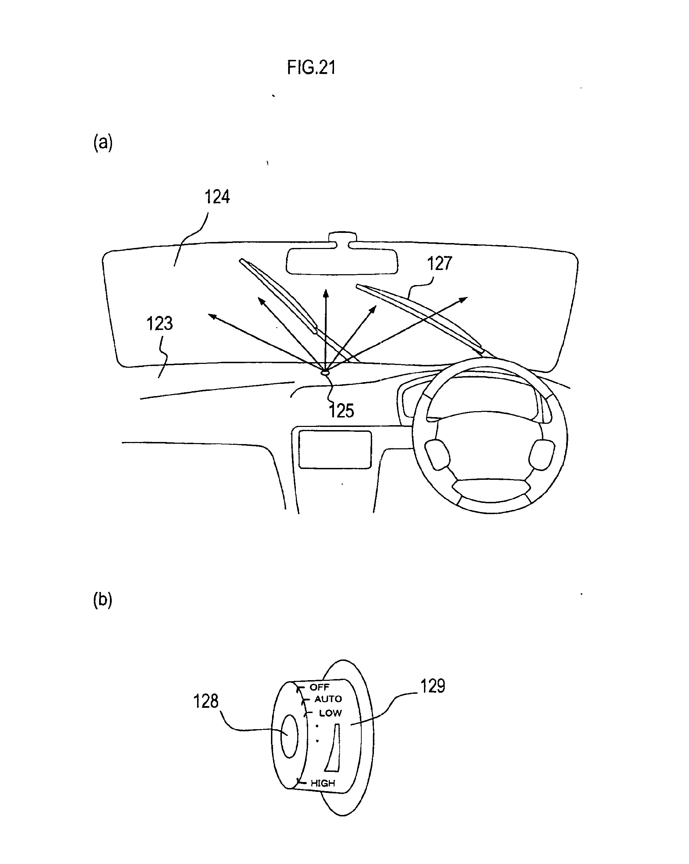

Figs. 21 to 23 are drawings which explain the technique relating to automatic control of wiper operation.

In general, the driver determines whether to operate the wiper, which is operated when it rains, etc., according to the windshield state. The driver uses a lever-type switch provided near the steering wheel for the wiper operation. However, the operation may be perceived as burdensome when heaviness of the rain frequently changes, or, to the unskilled driver. Thus, an automatic wiper control unit of the present invention comprises an imaging device for imaging the windshield state to obtain the image data, a windshield state detection device for detecting the windshield state from the image data obtained by the imaging device, and an automatic wiper control device for automatically controlling the wiper operation according to the windshield state detected by the windshield state detection device. Particularly, a camera 125 is provided on the dashboard of the vehicle toward the windshield as shown in Fig. 21(a), and the state of the windshield 124 is imaged. Detection of the windshield state is performed by applying the pattern recognition to the obtained image data, and the wiper motion pattern such as activation and inactivation of the wiper arm 127 or motion speeds while operated is determined according to the state. The camera may be set on any place other than the dashboard, provided that necessary image data can be obtained.

As to the operation method, a dial switch 129 is rather advantageous than the conventional lever switch having both characteristics of rotation and slide, since use frequency is low compared to the turn signal lever switch. It is also advantageous to prevent operation mistakes behind the wheel.

Fig. 21(b) shows an example of a rotation dial switch provided on a base of the steering wheel so that the driver can operate the automatic wiper control unit. The rotation dial switch 129 can be rotated to be switched among "OFF" "AUTO" "LOW (INTERMITTENCE 1)" "INTERMITTENCE 2" "INTERMITTENCE 3" ... "HIGH", etc. A washer fluid switch 128 for washer fluid is provided on the head of the rotation dial switch 129.

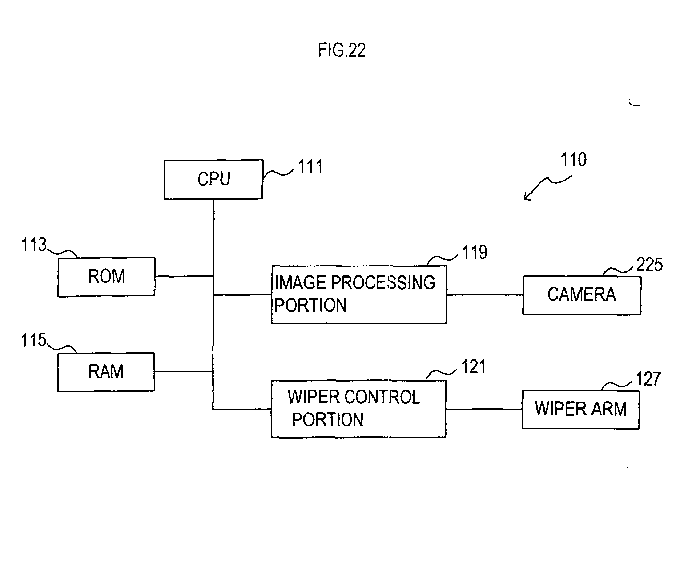

Fig. 22 shows an electrical constitution of such an automatic wiper control unit. The automatic wiper control unit 110 is provided with a CPU 111, a ROM 113, a RAM 115, a camera 125 connected to the imaging processing portion 119 and a wiper arm 127 connected to a wiper control portion 121.

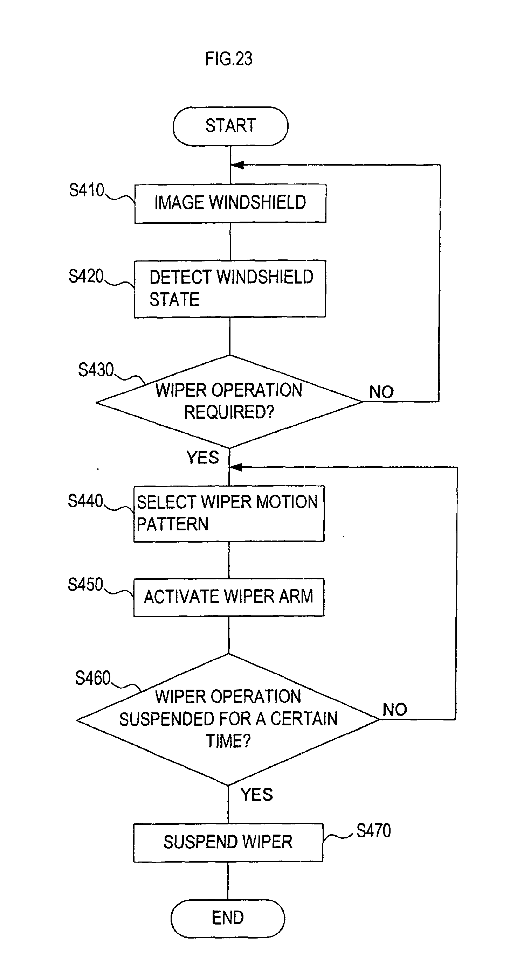

Referring to Fig. 23, operation of the automatic wiper control unit is explained.

In step S410, image data is obtained by imaging the windshield 124 by the camera 125. A windshield range to be imaged is the minimum range required to determine whether the wiper operation is necessary and which wiper motion pattern to be selected. The obtained image data is analyzed and the windshield state is detected in step S420.

Data of the windshield states under various environmental states are prepared by experiments as in the following in advance to detect the windshield state. It should be noted that the environmental states other than rain, snow, sand, etc., that is, vehicle speed, wind speed, wind direction, sun radiation, air temperature, humidity, temperature gap between inside and outside the vehicle, etc. are also taken into consideration.

Using an environmental simulator capable of providing such environmental states, the windshield states under various environmental states are imaged and converted to data suited for pattern recognition. Then, pattern recognition is performed to the image data which was imaged and obtained when it actually rained, and the data was compared with the image data stored in advance to detect the windshield state.

In the next step S430, it is determined whether it is necessary to activate the wiper arm 127. When it is determined that it is not necessary to activate the wiper arm 127, the process returns to step S410 and stands by for detection. When it is determined in step S430 that it is necessary to operate the wiper arm 127, the optimal wiper motion pattern is selected from the wiper motion patterns obtained in advance by the experiments in step S440, and the wiper arm 127 is activated in step S450. The automatic wiper control device is adapted to select a wiper motion which gives the best view, even if the wiper control is switched to manual control.

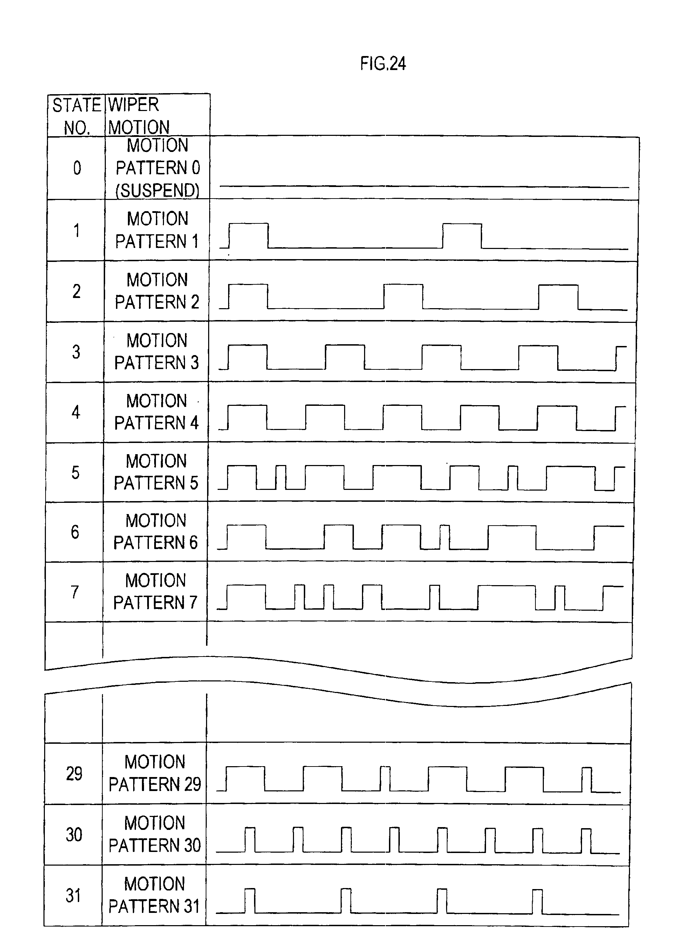

Now, a description of the wiper motion patterns is provided. As shown in Fig. 24, some basic patterns are defined in combination of some speeds and time according to the motion speeds and motion intervals of the wiper arm. The advantageous patterns for obtaining the best view by wiping the windshield in all the windshield states are found in advance by the experiments using the environmental simulator, and some of those patterns are set to be the basic patterns.

The motion speeds and motion intervals in the basic patterns do not necessarily have to be set at a regular time interval as before. A quick motion and a slow motion may be repeated alternately, or one quick motion followed by two slow motions may be repeated. Or quick motions and slow motions, long time intervals and short time intervals may be randomly combined. The basic wiper motion patterns are selected from the patterns which do not disturb the driver, provided that the best view is obtained by the operation of the wiper arm 127.

There are unlimited number of combinations between the motion speed and the motion interval of the above component. It is considered that the driver is hardly disturbed by the wiper operation during driving if the motion patterns are not like the pattern when the driver actually activated the wiper in the past. Combination of fluctuation which gives a few % allowance to pulse time in the motion patterns shown in Fig. 24 and randomness which irregularly produces the pulse is preferred.

For the above purpose, it is advantageous to use a random number table when the speed and time interval are to be selected. Firstly, the basic motion patterns are selected, and following the basic motion patterns, the aforementioned component is made to operate with motions having the pulse time fluctuation and pulse train randomness. Or a plurality of sub-basic patterns having the pulse time fluctuation and pulse train randomness may be defined in advance to the basic motion patterns, and according to one selected basic motion pattern, a plurality of sub-basic patterns may be repeated. In either way, the wiper motion patterns should be set so as not to be predicted which motion may occur after one wiper arm operation.

In the next step S460, it is determined whether the wiper operation is suspended for a certain time. If the wiper operation is not suspended for a certain time, the process returns to step S440 and the wiper motion pattern is selected. In step S450, the wiper arm 127 is activated. When the state of wiper motion pattern 0 (suspended) is maintained for a certain time, that is, when the wiper motion is suspended for a certain time and it is determined that it is no more necessary to activate the wiper, the wiper motion pattern is set to 0 (suspended) to stop wiper motion and the process ends.

In case that it is necessary to set the wiper motion pattern according to likings of the driver or vehicle owner, it is preferable that the wiper control unit is made to learn the likings, by providing a speed learning feature, when the wiper is operated manually. Then, the driver can select the most suitable wiper motion pattern even when the wiper is operated automatically. It is preferable that the settings data specific to the driver obtained as above can be stored in the storage portion of the driver license as driver characteristic data. Then, the vehicle in which the driver license card 50 is set can be brought into the optimal state for the driver. Examples of other possible settings storage data regarding the driver's likings are seat position, steering wheel position, etc.

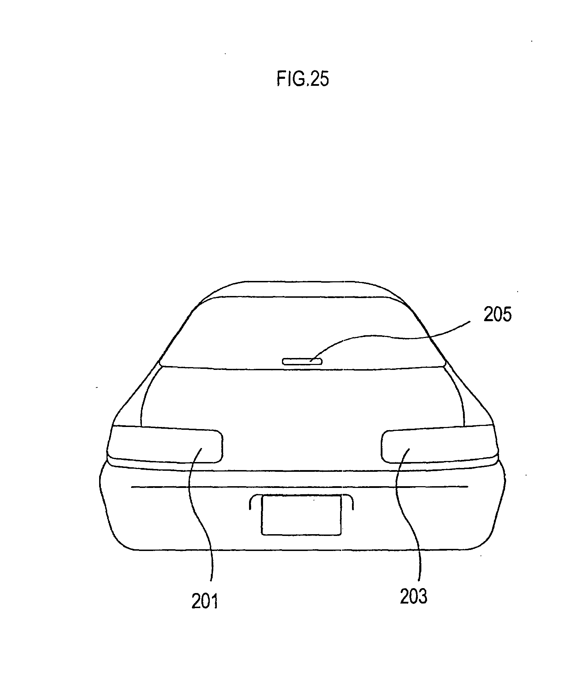

Figs. 25 to 28 explain a new technique relating to flickering control of the brake lamp.

The conventional brake lamp lights up when the driver is operating the brake pedal. When the operation so-called pumping brake, in which the brake pedal is operated in short intervals, is performed, a braking distance is shortened and the brake lamp flickers, which is known as an easy sign of stopping to the following vehicle. In other words, if the brake pedal operation interval is long at the time of ordinary stopping, and short at the time of emergency, the driver of the following vehicle can predict the deceleration emergency of the vehicle ahead and the danger which may arise to the own vehicle based on the flickering and flickering intervals of the brake lamp of the vehicle ahead. Or, the driver of the following vehicle predicts deceleration emergency by how quick distance between the vehicle ahead and a vehicle further ahead. However, if the emergency level is high, it is hard for the driver to keep the composure. Moreover, in recent years, most of the vehicles are provided with ABS (anti-lock brake system) in the vehicle braking unit. Therefore, it is difficult to lock tires and the driver thus has to keep depressing the brake pedal, resulting in that the driver in the following vehicle is likely to bump into the rear of the vehicle ahead due to delay in perceiving the emergency stopping of the vehicle ahead.

A brake lamp flickering control unit, which is advantageous in avoiding such a danger as much as possible, is described hereafter. The brake lamp flickering control unit comprises an acceleration detection device for detecting deceleration of the vehicle, and a flickering control device for flickering the brake lamp at the time interval corresponding to the vehicle deceleration obtained from the acceleration detection device. This brake lamp flickering control unit shortens the flickering time interval as the deceleration is increased so that it is possible to notify how urgently the vehicle is slowing down to the following vehicle.

As to the flickering time interval, it is preferable that the lamp flickers as short as the human can reproduce with the pedal, that is, not too short to be unnatural.

The brake lamp which performs the above flickering operation may be a brake lamp 205 at a center position of the vehicle, or tail lamps 201, 203 on both sides of the vehicle as shown in Fig. 25. The above technique may be applied to all the lamps 201, 203, 205. It is most favorable to be applied to the brake lamp 205 at the center of the vehicle.

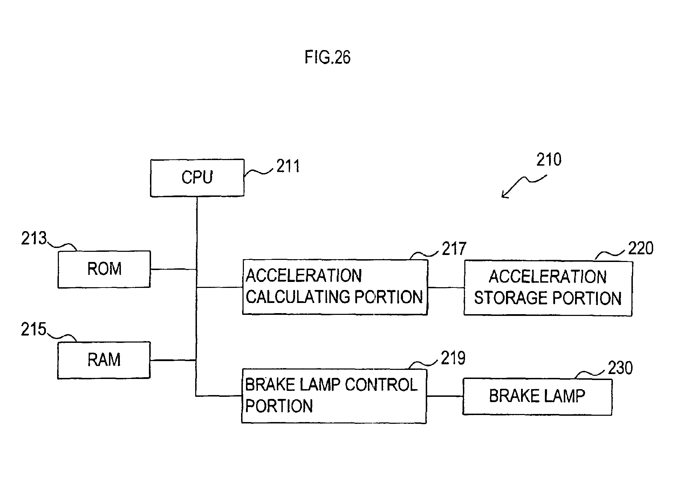

The brake lamp flickering control unit 210 comprises, as shown in Fig. 26, a CPU 211, a ROM 213, a RAM 215, an acceleration storage portion 220 connected to an acceleration calculating portion 217, and a brake lamp 230 connected to a brake lamp control portion 219.

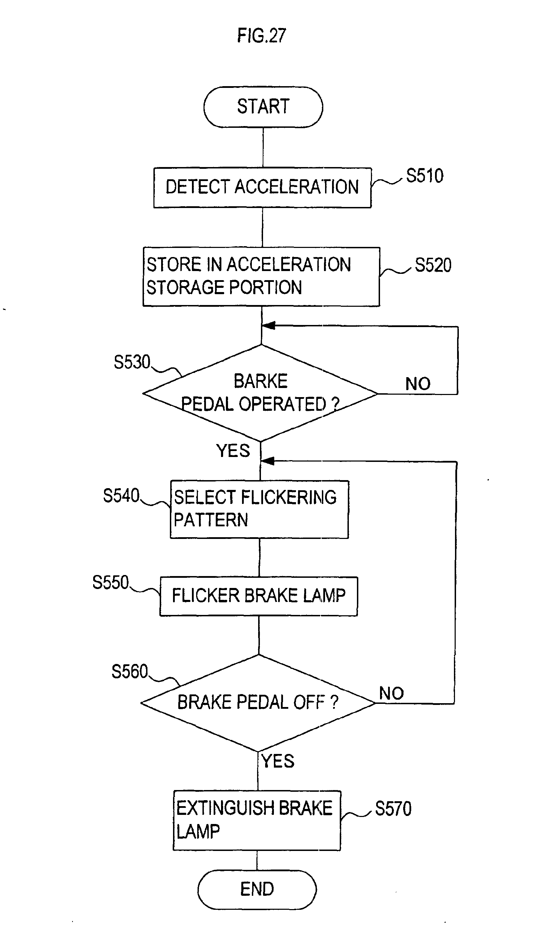

Now, the operation of the brake lamp control unit 210 is described referring to the flowchart shown in Fig. 27.

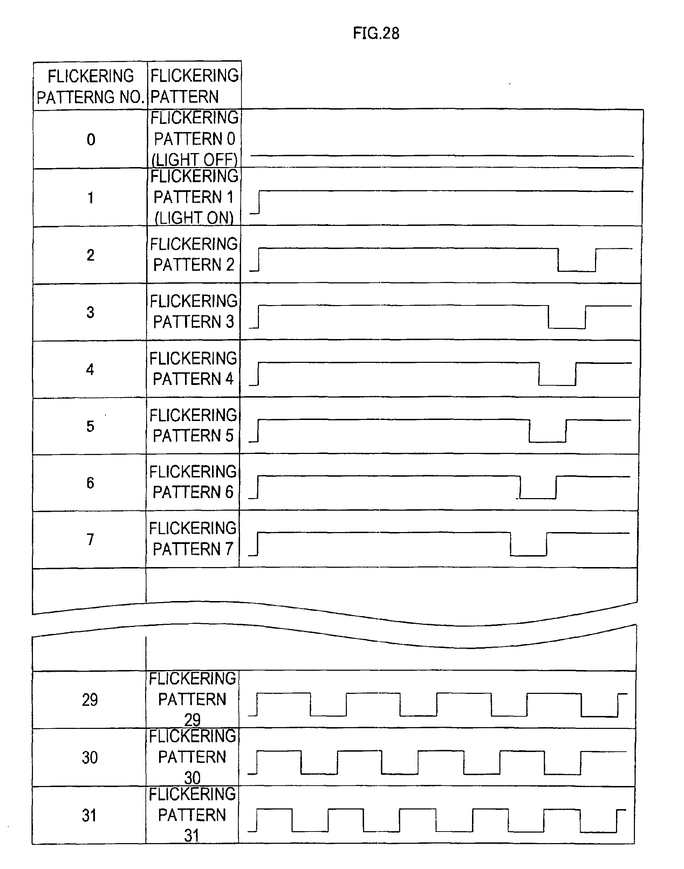

Firstly, acceleration is detected in step S510, and stored in the acceleration storage portion 220 in step S520. The acceleration is detected constantly and stored in the acceleration storage portion 220, and the aforementioned vehicle information processing portion 53 stores this acceleration data in the acceleration storage portion 220. In the next step S530, it is determined whether the operation of the brake pedal is detected. If the brake pedal is not operated, the process is suspended till the brake pedal operation is detected. If the operation of the brake pedal is detected, the process proceeds to step S540, and the flickering pattern number shown in an example of Fig. 28 corresponding to the deceleration at the time is selected. In the next step S550, the brake lamp 230 is flickered at the flickering pattern corresponding to the selected flickering pattern number.

In the next step S560, it is determined whether the brake pedal is OFF. If the brake pedal is not OFF, the process returns to step S540, and the aforementioned steps S540 to S550 are repeated according to the deceleration. The flickering pattern corresponding to the deceleration at the time is selected when the vehicle slows down.

Fig. 28 shows an example of the flickering patterns. In the flickering patterns, on and off of the lights are repeated at regular time intervals, and as the flickering pattern number is increased, the flickering time intervals are shortened. It is preferable that the flickering patterns having regularity as above are defined in advance.

In step S560, when OFF of the brake pedal is detected, the brake lamp 230 is extinguished and the process ends.

In the above, some of the embodiments of the present invention are explained. However, the present invention should not be limited to these embodiments, and can be implemented under various states. For instance, the artificial satellites or the like for positioning a vehicle are not necessarily limited to the GPS satellites. Any artificial satellites or the like having a function of detecting the latitude, the longitude and the altitude defining the position of a vehicle can be utilized.

Correspondence between the components in the above embodiments and components in claims of the present invention to follow is as below.

The driver license card 50 in the embodiments corresponds to a driver license card in claims. The card function processing portion 51 in the embodiments corresponds to the reading device in claims. The GPS information processing portion 55 in the embodiments corresponds to a portion for outputting latitude data, longitude data, and altitude data in the information output device in claims. The clock 42 in the embodiments corresponds to a portion for outputting time data in the information output device in claims. The external storage unit 46 and the vehicle ID code storage area 71, driver ID code storage area 72, time data storage area 73, vehicle passing point latitude data storage area 75, vehicle passing point longitude data storage area 77, vehicle passing point altitude data storage area 78 of the vehicle data table 70 in the storage unit 63 in the embodiments correspond to the vehicle traveling position data storage device in claims. The nationwide all-road database 80 in the storage unit 63 corresponds to the road data storage device in claims. Steps S210 to S280 and S310 to S340 of the main control portion 61 in the embodiments correspond to a process of the charge calculation device which specifies a travel section of the toll road in which the vehicle has traveled and calculates the charge in claims. Steps S350 and S360 of the main control portion 61 in the embodiments correspond to the charge collection handling device in claims.

The communication functioning portion 57 in the embodiments corresponds to the communication device of the vehicle in claims, and the communication processing portion 65 in the embodiments corresponds to the communication device of the system data center 20 in claims.

The vehicle information processing portion 53 in the embodiments corresponds to the vehicle operating state parameter collection device in claims. The vehicle operating state data storage area 79 in the vehicle data table 70 of the storage unit 63 in the embodiments corresponds to the vehicle operating state storage device in claims. The main control portion 61 and the vehicle operating state data storage area 79 of the storage unit 63 and communication processing portion 65 in the embodiments correspond to the vehicle diagnosis notification device and driver's driving technique diagnosis device in claims.

Step S140 in the embodiments corresponds to the engine start determination device for determining whether to permit starting the engine in claims.

The driver license card 50, card function processing portion 51, CPU 41, ROM 43 and RAM 45 in the embodiments correspond to the vehicle state setting device for setting the vehicle to the optimal state for the driver in claims.

The main control portion 61, communication functioning portion 57 and communication processing portion 65 in the embodiments correspond to the road congestion state analyzing device in claims.

The camera 127 in the embodiments corresponds to the detection device for detecting the windshield state in claims. The CPU 111, ROM 113, RAM 115 and step S420 by the image processing portion 119 corresponds to the windshield state detection device in claims. The wiper motion pattern determination process in step S440 in the embodiments corresponds to a process in the automatic wiper control device in claims. The main control portion 61 in the embodiments corresponds to the rain distribution monitoring device in claims.

The camera 152 in the embodiments corresponds to the image device for imaging the tire running surface to obtain three-dimensional image in claims. The CPU 41, ROM 43, RAM 45 and vehicle information processing portion 53 correspond to the tire deterioration detection device for detecting a deterioration state of tires.

The acceleration calculating portion 217, acceleration storage portion 220, CPU 211, ROM 213 and RAM 215 in the embodiments correspond to the acceleration detection device in claims, and step S510 in the embodiments corresponds to an acceleration detection process in claims.

Steps S530 to S570 in the embodiments correspond to the brake lamp flickering control device for controlling flickering of the brake lamp in claims.

### INDUSTRIAL AVAILABILITY

Complete automation of the toll road charge collection becomes possible, and an improvement in quality of customer services to toll road traveling persons can be achieved. The facilities can be simplified and thus reduction of equipment costs and personnel can be realized since entrance and exit gates and toll booths, etc. are no more necessary. Furthermore, traffic congestion in the vicinity of toll road entrances and exits and toll booths hardly occurs.

## Claims

1. A toll road charge collection system comprising:
a driver license card capable of storing in advance a driver identification code as well as data relating to a driving license, etc.;
a reading device for reading storage data from the driver license card;
an information output device for outputting latitude data, longitude data, and altitude data defining a position of a vehicle, obtained using an artificial satellite, together with time data obtained from a clock;
a vehicle traveling position history data storage device for storing vehicle traveling position data corresponding to a traveling vehicle position history of the vehicle based on the latitude data, longitude data, altitude data and time data outputted from the information output device;
a road data storage device for storing in advance road names, locations and altitudes as well as data necessary to calculate a toll road traveling charge;
a charge calculation device for specifying in which toll road traveling section the vehicle has traveled and calculating a traveling charge based on memory contents of the vehicle traveling position history data storage device and memory contents of the road data storage device; and
a charge collection processing device for collecting the toll road traveling charge calculated by the calculation device by automatic payment through an account of a financial institution set by a toll road traveling person in advance, based on the driver identification code read by the reading device.

2. The toll road charge collection system as set forth in claim 1 wherein the toll road charge collection system comprises a plurality of vehicles, some artificial satellites, and a system data center, each of the vehicles comprising the reading device, vehicle operating state storage device, information output device, and communication device for communication, and the system data center comprising the vehicle traveling position history data storage device, road data storage device, charge calculation device, charge collection processing device, and communication device for communication.

3. The toll road charge collection system as set forth in claim 1 wherein the vehicle further comprises an engine start determination device for permitting the engine to be started as an authentic driver license card is inserted.

4. The toll road charge collection system as set forth in claim 1 wherein the driver license card is an IC card.

5. The toll road charge collection system as set forth in claim 4 wherein the IC card stores in advance the driver identification code as well as the data relating to the driver license, and also stores data relating to driving characteristics of the driver read from an MPU of the vehicle, and the vehicle comprises a vehicle state setting device for setting the vehicle to the most appropriate state for the driver according to the data relating to the driving characteristics of the driver which is read into the MPU of the vehicle from the IC card by the reading device.

6. The toll road charge collection system as set forth in claim 2 wherein a vehicle operating state of each operating portion of the vehicle is expressed in numeric value, and wherein the toll road charge collection system comprises a function of transmitting data representing a possible state of each operating portion associated with a number as a vehicle operating state parameter together with the time data to the system data center which performs a charge collection process.

7. The toll road charge collection system as set forth in claim 2 wherein the vehicle comprises a vehicle operating state parameter collecting device for collecting a parameter indicating an operating state of each operating portion of the vehicle, and
the system data center further comprises a vehicle operating state storage device for storing the vehicle operating states collected by the vehicle operating state parameter collecting device per vehicle, a vehicle diagnosis device for determining whether the vehicle operating state is appropriate based on memory contents stored in the vehicle operating state parameter storage device, and a vehicle diagnosis result notification device for making a notification to the owner of the vehicle specified by the vehicle identification code when it is determined that maintenance is required.

8. The toll road charge collection system as set forth in claim 2 wherein the toll road data is treated as toll road section number data, by numbering each section from an interchange to the next interchange in all the toll road routes across the country a unique number, and the toll road within the traveling vehicle position history in which the vehicle has traveled is identified by the toll road section number in the system data center.

9. The toll road charge collection system as set forth in claim 2 wherein the system data center further comprises a driver's driving technique diagnosis device for diagnosing the driver's driving technique by analyzing the vehicle operating state parameter, latitude data, longitude data, and altitude data defining vehicle position data, time data, vehicle operating state data, and nationwide all-road database having latitude data, longitude data, and altitude data, together with time data.

10. The toll road charge collection system as set forth in claim 2 wherein the system data center further comprises a road congestion state analyzing device for analyzing the road congestion state based on information indicating vehicle positions transmitted from a plurality of vehicles and information about the traveling directions and vehicle speeds, wherein the analysis result information is transmitted to each vehicle so that each vehicle is enabled to search an optimal traveling path to a destination in a road state at the time by analyzing the road congestion state data which is the transmitted realtime information together with road position data stored in advance as a vehicle navigation feature.

11. The toll road charge collection system as set forth in claim 2 wherein the vehicle further comprises an imaging device for imaging a windshield state, a windshield state detection device for detecting the windshield state from the image data obtained by the imaging device, and an automatic wiper control device, in the form of a dial rotational switch, for automatically controlling wiper operation in a wiper motion pattern which is determined according to the windshield state detected by the windshield state detection device, a pulse time width of the wiper motion pattern having pulse time fluctuation and pulse train randomness.

12. The toll road charge collection system as set forth in claim 2 wherein the system data center further comprises a rainfall distribution monitoring device for monitoring rainfall distribution by analyzing wiper operating state data transmitted from a plurality of vehicles.

13. The toll road charge collection system as set forth in claim 2 wherein the vehicle further comprises an imaging device for imaging a tire running surface, etc., and a tire deterioration detection device for detecting a tire deterioration state from the three-dimensional image of the tire running surface obtained by the imaging device.

14. The toll road charge collection system as set forth in claim 2 wherein the vehicle further comprises an acceleration detection device for detecting acceleration of the vehicle, and a brake lamp flickering control device for flickering a brake lamp at time intervals corresponding to deceleration detected by the acceleration detection device and controlling flickering in such a way that the flickering time interval is shortened as the deceleration is increased.

15. A charge collecting machine in a MPU of a vehicle, the charge collecting machine comprising a position information output device for outputting latitude data, longitude data, and altitude data calculated based on radio signal received from artificial satellites and a navigation feature for determining a vehicle traveling path, the charge collecting machine comprising a reading device for reading data from a driver license card storing a driver identification code as well as data relating to the driver license, a communication device for transmitting the driver identification code read by the reading device and latitude data, longitude data, and altitude data of the vehicle outputted from the position information output device together with the time data to the system data center, and a navigation feature for determining the most appropriate vehicle traveling path at the time by analyzing information based on the position information from the position information output device, information in the vehicle navigation feature based on the vehicle traveling path to the destination, road congestion state information obtained by the road congestion state analyzing device.

16. A charge collecting machine to be mounted on a vehicle, the unit comprising a driver license card storing in advance a driver identification code and data relating to the driver license, a reading device for reading storage data from the driver license card, an information output device for outputting altitude data, longitude data, and altitude data defining a vehicle position obtained from an artificial satellite together with time data obtained from a clock, and a transmission device for transmitting the data read by the reading device and the data from the information output device as time-series accumulation/storage data to a system data center that performs a road charge collection process.

17. A road charge collecting method comprising steps of:
reading storage data from a driver license card storing in advance a driver identification code as well as data relating to the driver license;
outputting latitude data, longitude data, and altitude data defining a vehicle position obtained using artificial satellites, etc. together with time data obtained from a clock;
storing vehicle traveling position history data indicating a vehicle traveling position history based on the outputted latitude data, longitude data, altitude data and time data;
determining whether the vehicle has traveled in a toll road based on the stored latitude data, longitude data, altitude data and time data, and a nationwide all-road database designed to have three-dimensional data including latitude data, longitude data, and altitude data defining locations of toll roads; and
determining a traveling charge based on data regarding a toll road section in which it is determined the vehicle has traveled and a toll road traveling charge according to a vehicle type registered in advance, transmitting the charge collection data to a financial institution together with the driver identification code read by the reading device, and collecting the toll road traveling charge by automatic payment through an account of the financial institution.
